# EUROPEAN PATENT APPLICATION

(11) **EP 4 841 760 A1**
(43) Date of publication of application: **18.11.2026**
(21) Application number: 26173940.3
(22) Date of filing: 22.04.2026
(51) Int. Cl.: H01M 50/15, H01M 50/188, H01M 50/533, H01M 50/553

(54) **SECONDARY BATTERY AND BATTERY MODULE INCLUDING THE SAME**

(30) Priority: 12.05.2025 KR 20250061360
(71) Applicant: SAMSUNG SDI CO., LTD., Yongin-si, Gyeonggi-do 17084 (KR)
(72) Inventor: CHAE, Hee Dong, 16678 Suwon-si, Gyeonggi-do (KR); JEON, Du Seong, 16678 Suwon-si, Gyeonggi-do (KR); LEE, Ju Hyeon, 16678 Suwon-si, Gyeonggi-do (KR); LEE, Young Jin, 16678 Suwon-si, Gyeonggi-do (KR)
(74) Representative: Bardehle Pagenberg Partnerschaft mbB Patentanwälte Rechtsanwälte

(57) **Abstract**

A secondary battery includes a case, an electrode assembly that is disposed in the case and has a first electrode and a second electrode, a cap plate that is coupled to an open portion of the case and has a first terminal hole formed therein, a first connection member installed on an inner side surface of the cap plate and electrically connected to the first electrode, a first terminal installed on an outer side surface of the cap plate and connected to the first connection member through the first terminal hole, a first sealing member disposed between the cap plate and the first connection member, and a first insulating member disposed between the cap plate and the first terminal.

## Description

### CROSS-REFERENCE TO RELATED APPLICATIONS

This present application claims priority to and the benefit under 35 U.S.C. § 119(a)-(d) of Korean Patent Application No. 10-2025-0061360, filed on May 12, 2025, in the Korean Intellectual Property Office, the entire disclosure of which is incorporated herein by reference.

### FIELD

The present disclosure relates to a secondary battery and a battery module including the same.

### BACKGROUND

In recent years, with the rapid spread of electronic devices that use batteries, such as mobile phones, laptop computers, electric vehicles, and energy storage systems (ESSs), the demand for rechargeable batteries with high energy density and high capacity has rapidly increased. Accordingly, research and development for improving performance of rechargeable lithium batteries are actively underway.

A rechargeable lithium battery is a battery including a positive electrode and a negative electrode including an active material which allows for intercalation and deintercalation of lithium ions and an electrolyte, and produces electrical energy through an oxidation-reduction reaction taking place when the lithium ions are intercalated and deintercalated to and from the positive electrode and the negative electrode.

The herein-described information disclosed in the technology that forms the background of the present disclosure is only intended to improve understanding of the background of the present disclosure, and thus may include information that does not constitute the related art.

### SUMMARY

A secondary battery according to the present disclosure includes: a case; an electrode assembly that is disposed in the case and has a first electrode and a second electrode; a cap plate that is coupled to an open portion of the case and has a first terminal hole formed therein; a first connection member installed on an inner side surface of the cap plate and electrically connected to the first electrode; a first terminal installed on an outer side surface of the cap plate and connected to the first connection member through the first terminal hole; a first sealing member disposed between the cap plate and the first connection member; and a first insulating member disposed between the cap plate and the first terminal.

The first connection member and the first terminal may be bonded to one another with the cap plate, the first sealing member, and the first insulating member disposed therebetween and may be integrally joined to the cap plate, the first sealing member, and the first insulating member.

The first sealing member may come into contact with the inner side surface of the cap plate due to a bonding force between the first connection member and the first terminal.

The first insulating member may come into contact with the outer side surface of the cap plate due to a bonding force between the first connection member and the first terminal.

The first sealing member and the first insulating member may come into contact with one another due to a bonding force between the first connection member and the first terminal.

The cap plate may include: a cap plate body having the first terminal hole formed therein; and a first assembly groove formed in an inner side surface of the cap plate body and to which the first sealing member is fitted.

The cap plate may further include a first protruding portion that is formed on the first assembly groove to protrude therefrom and comes into contact with the first sealing member.

The cap plate may further include a second protruding portion that is formed on the first assembly groove to protrude therefrom and comes into contact with the first sealing member at a position spaced from the first protruding portion.

The cap plate may further include a second assembly groove that is formed in an outer side surface of the cap plate body and on which an edge of the first insulating member is seated.

The first sealing member may include a first sealing portion that extends along a circumference of the first terminal hole and is located between the cap plate and the first connection member; and a second sealing portion that protrudes from the first sealing portion toward the first terminal hole and faces the first insulating member.

The first sealing portion may include: a first close contact portion that is connected to the second sealing portion and comes into contact with the cap plate; and a second close contact portion that is formed to protrude from the first close contact portion toward the first connection member and comes into contact with the first connection member.

The first sealing portion may further include a first groove formed in the second close contact portion to be recessed therefrom and to which an edge of the first connection member is fitted.

The first connection member may include: a first connection body that faces the first terminal hole at a side of the inner side surface of the cap plate; and a first support body that is formed on an edge portion of the first connection body and has a form that is bent toward the cap plate.

The electrode assembly may include a first tab member that extends from the first electrode toward the first connection member, and the first connection body may include: a first terminal connection plate that comes into contact with the first terminal; and a first tab connection plate that is connected to the first terminal connection plate and comes into contact with the first tab member.

The first connection member may further include one or more first grooves formed in the first tab connection plate to be concave toward the first tab member.

The first support body may include: a first bent portion having a form that is bent in a first direction from an edge of the first connection body; a second bent portion that is connected to the first bent portion and has a form that is bent in a direction different from the first direction; and a third bent portion that is connected to the second bent portion and has a form that is bent substantially in the first direction.

The first bent portion may have a first protruding width, the third bent portion may have a second protruding width, and the first support body may have a form that protrudes by as much as a sum of the first protruding width and the second protruding width from the first connection body.

The first terminal may include: a first outer block that has a greater width than the first terminal hole and has an edge portion facing the outer side surface of the cap plate; and a first inner block that extends from the first outer block toward the first connection member, has a smaller width than the first outer block, and passes through the first terminal hole.

The cap plate may further include a second terminal hole that is disposed to be spaced from the first terminal hole, and the secondary battery may further include: a second connection member installed on the inner side surface of the cap plate and electrically connected to the second electrode; a second terminal installed on the outer side surface of the cap plate and connected to the second connection member through the second terminal hole; a second sealing member disposed between the cap plate and the second connection member; and a second insulating member disposed between the cap plate and the second terminal.

A battery module according to the present disclosure includes: a housing; and a plurality of rechargeable batteries disposed in the housing, wherein each plurality of the rechargeable batteries includes: a case; an electrode assembly that is disposed in the case and has a first electrode and a second electrode; a cap plate that is coupled to an open portion of the case and has a first terminal hole formed therein; a first connection member installed on an inner side surface of the cap plate and electrically connected to the first electrode; a first terminal installed on an outer side surface of the cap plate and connected to the first connection member through the first terminal hole; a first sealing member disposed between the cap plate and the first connection member; and a first insulating member disposed between the cap plate and the first terminal.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a configuration of a battery module according to embodiments of the present disclosure.
FIG. 2 is a perspective view schematically illustrating a configuration of a secondary battery according to embodiments of the present disclosure.
FIG. 3 is a main exploded perspective view schematically illustrating the configuration of the secondary battery according to embodiments of the present disclosure.
FIG. 4 is a view schematically illustrating a configuration of an electrode assembly according to embodiments of the present disclosure.
FIG. 5 is a main enlarged view schematically illustrating configurations of a first tab member, a first connection member, and a first terminal according to embodiments of the present disclosure.
FIG. 6 is a main enlarged view schematically illustrating configurations of a second tab member, a second connection member, and a second terminal according to embodiments of the present disclosure.
FIGS. 7 and 8 are perspective views schematically illustrating a cap plate assembly according to embodiments of the present disclosure.
FIG. 9 is an enlarged view of portions of the cap plate assembly where the first connection member and the first terminal are disposed according to embodiments of the present disclosure.
FIG. 10 is a main exploded perspective view of FIG. 9.
FIG. 11 is an enlarged view of portions of the cap plate assembly where the second connection member and the second terminal are disposed according to embodiments of the present disclosure.
FIG. 12 is a main exploded perspective view of FIG. 11.
FIG. 13 is a cross-sectional view along line A-A' of FIG. 9.
FIG. 14 is a cross-sectional view along line B-B' of FIG. 9.
FIG. 15 is an enlarged view of a portion of FIG. 14.
FIGS. 16 and 17 are main perspective views schematically illustrating a cap plate according to embodiments of the present disclosure.
FIGS. 18 and 19 are main perspective views schematically illustrating the first connection member according to embodiments of the present disclosure.
FIG. 20 is a perspective view schematically illustrating the first terminal according to embodiments of the present disclosure.
FIG. 21 is a perspective view schematically illustrating a first sealing member according to embodiments of the present disclosure.
FIG. 22 is a perspective view schematically illustrating a first insulating member according to embodiments of the present disclosure.
FIGS. 23 to 26 are views for describing a manufacturing process of the cap plate assembly according to embodiments of the present disclosure.
FIG. 27 is a main perspective view schematically illustrating a cap plate assembly according to embodiments of the present disclosure.
FIG. 28 is a cross-sectional view along line C-C' of FIG. 27.
FIGS. 29 to 31 are views for describing a process of bonding a case, an electrode assembly, and a cap plate assembly to one another according to embodiments of the present disclosure..

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to one another, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to one another.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

The present disclosure is directed to providing a secondary battery and a battery module including the same capable of reliably implementing an electrical connection structure between an electrode assembly and a terminal by an easier, simpler process.

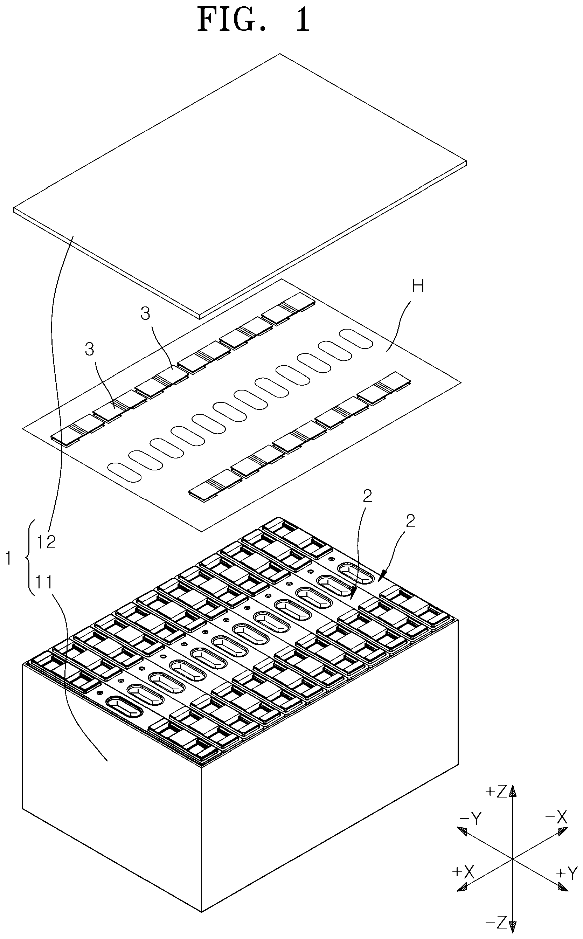

FIG. 1 is a perspective view schematically illustrating a configuration of a battery module according to embodiments of the present disclosure.

Referring to FIG. 1, a battery module according to embodiments of the present disclosure includes a housing 1, a secondary battery 2, and a busbar 3.

The housing 1 forms a schematic exterior of the battery module and may have a space in which the secondary battery 2 can be accommodated provided therein. The housing 1 according to embodiments of the present disclosure may include a housing body 11 and a cover 12. The housing body 11 may be formed to have the form of a box that is hollow and has one open side. The cover 12 may be coupled to the housing body 11 and may close the space inside the housing body 11.

A cross-sectional shape of the housing body 11 is not limited to the quadrangular shape illustrated in FIG. 1 and may be changed to various shapes such as a polygonal shape, a circular shape, and an elliptical shape. The cover 12 may be formed to have a substantially plate-like form and may be disposed to face the open side of the housing body 11. The cover 12 may be fixed to the housing body 11 using various types of coupling methods such as bolting, welding, and fitting.

The secondary battery 2 may serve as a unit structure that stores and supplies power in the battery module. The secondary battery 2 may be disposed inside the housing 1. The secondary battery 2 may be provided as a plurality of rechargeable batteries 2. The plurality of rechargeable batteries 2 may be arranged in two or more columns in at least any one of a longitudinal direction of the housing 1 (the X-axis direction based on FIG. 1) or a width direction of the housing 1 (the Y-axis direction based on FIG. 1).

Although FIG. 1 illustrates an example in which the plurality of rechargeable batteries 2 are arranged in one column in the longitudinal direction of the housing 1, the arrangement form of the plurality of rechargeable batteries 2 is not limited thereto and may be changed to various other forms. The plurality of rechargeable batteries 2 may be disposed parallel to one another. The number of rechargeable batteries 2 may vary according to the size, shape, etc., of the housing 1.

The busbar 3 may electrically connect the plurality of rechargeable batteries 2. The busbar 3 according to embodiments of the present disclosure may be disposed between the cover 12 and the rechargeable batteries 2. The busbar 3 may be provided as a plurality of busbars 3. Each busbar 3 may connect a pair of rechargeable batteries 2 neighboring one another in series or parallel.

The busbars 3 may be formed of an electrically conductible material such as copper, aluminum, or nickel. A specific shape of the busbars 3 is not limited to that illustrated in FIG. 1 and may be changed to various other shapes that allow the busbars 3 to electrically connect the rechargeable batteries 2 neighboring one another.

The plurality of busbars 3 may be supported by a busbar holder H inside the housing 1. The busbar holder H according to embodiments of the present disclosure may be formed to have the form of a flat plate. The busbar holder H may be disposed between the cover 12 and the rechargeable batteries 2. The busbars 3 may be fixed to the busbar holder H using various types of coupling methods such as fitting, bolting, and injection joining. The busbar holder H may be configured to include a polymer compound material that can provide electrical insulation.

The secondary battery 2 according to various embodiments of the present disclosure will be described herein. An example in which the secondary battery is a lithium ion secondary battery and is a prismatic battery will be described herein. However, the present disclosure is not limited thereto, and the secondary battery may be a lithium polymer battery or a cylindrical battery.

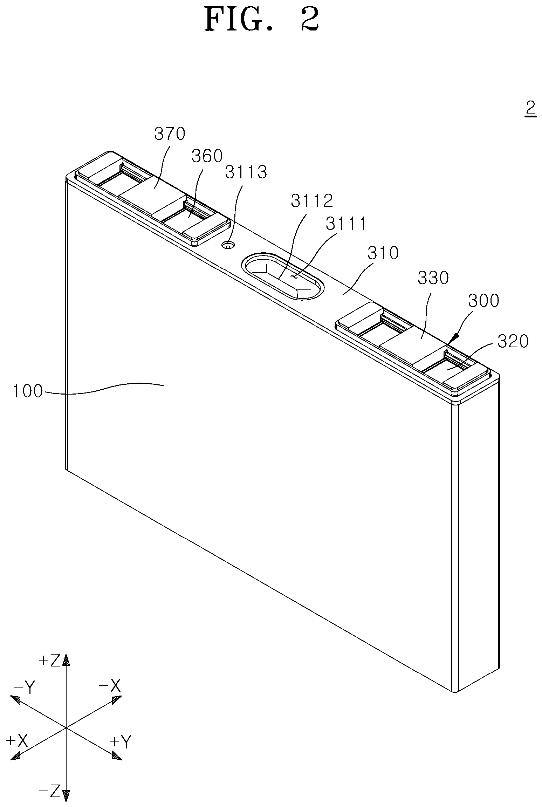

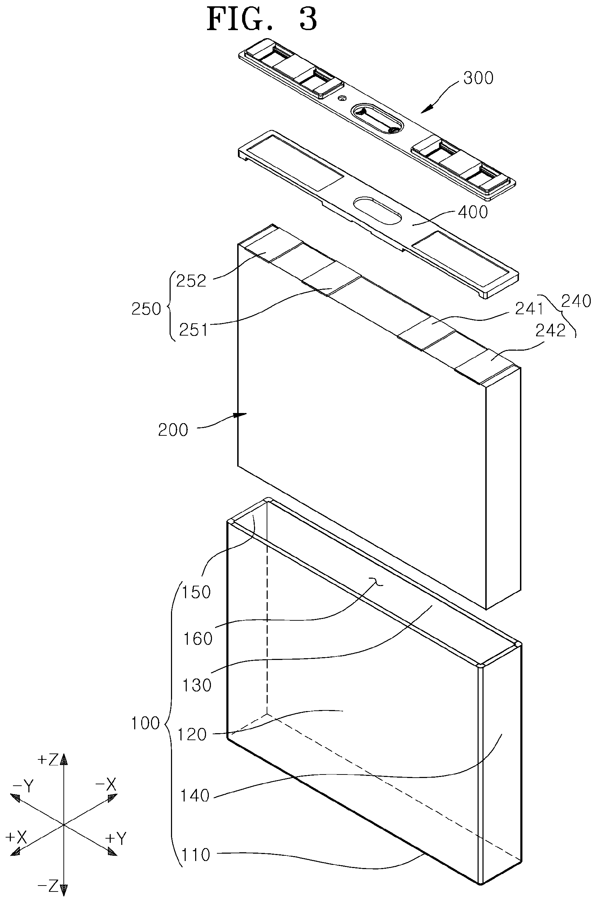

FIG. 2 is a perspective view schematically illustrating a configuration of a secondary battery according to embodiments of the present disclosure, and FIG. 3 is a main exploded perspective view schematically illustrating the configuration of the secondary battery according to embodiments of the present disclosure.

A first direction mentioned herein may be the +Z-axis direction based on FIGS. 2 and 3, a second direction may be the -Y-axis direction, and a third direction may be the -X-axis direction.

Referring to FIGS. 2 and 3, the secondary battery 2 according to embodiments of the present disclosure includes a case 100, an electrode assembly 200, and a cap plate assembly 300.

The case 100 may provide an inner space in which the electrode assembly 200 can be accommodated. The case 100 may have a material and rigidity that can protect the electrode assembly 200 accommodated therein. The case 100 may include a metal material or may include a synthetic resin material such as plastic. The case 100 may form a schematic exterior of the secondary battery 2. One portion of the case 100 may be open without being sealed, and the electrode assembly 200 may be inserted into and accommodated in the case 100 through an open portion 160 which is open in this way.

The cap plate assembly 300 may have a shape that corresponds to the open portion 160 as a whole and may be disposed to cover the open portion 160 of the case 100. The cap plate assembly 300 may be coupled to the case 100 and may seal the open portion 160. The case 100 and the cap plate assembly 300 may together form a schematic exterior of the secondary battery 2.

The electrode assembly 200 may serve as a unit structure that performs power charging and discharging operations in the secondary battery. The electrode assembly 200 may be accommodated in the case 100. The electrode assembly 200 may be electrically connected to the busbar 3 or the like disposed outside the case 100 through the cap plate assembly 300 while covered by the case 100.

The case 100 according to embodiments of the present disclosure may include a bottom portion 110, a front portion 120, a rear portion 130, a first side portion 140, and a second side portion 150.

The bottom portion 110 may form an exterior of a lower side of the case 100 (based on FIG. 3). The bottom portion 110 according to embodiments of the present disclosure may have the form of a rectangular plate. The bottom portion 110 may be seated on a bottom surface of the housing body 11. The front portion 120, the rear portion 130, the first side portion 140, and the second side portion 150 may form an exterior of peripheral surfaces of the case 100.

The front portion 120, the rear portion 130, the first side portion 140, and the second side portion 150 according to embodiments of the present disclosure may each have the form of a plate that extends in the first direction from an edge of the bottom portion 110. The front portion 120, the rear portion 130, the first side portion 140, and the second side portion 150 may be disposed to surround a space at an upper side of the bottom portion 110. The front portion 120, the rear portion 130, the first side portion 140, and the second side portion 150 may be disposed to constitute a rectangular cross-sectional shape.

The front portion 120 and the rear portion 130 may be disposed to face one another in the third direction. The rear portion 130 may be disposed to be spaced a predetermined distance from the front portion 120 in the third direction. The front portion 120 and the rear portion 130 may be disposed parallel to one another. Areas of the front portion 120 and the rear portion 130 may be equal to one another.

The first side portion 140 and the second side portion 150 may be disposed to face one another in the second direction. The second side portion 150 may be disposed to be spaced a predetermined distance from the first side portion 140 in the second direction. The first side portion 140 and the second side portion 150 may be disposed parallel to one another. Areas of the first side portion 140 and the second side portion 150 may be equal to one another. The area of each of the first side portion 140 and the second side portion 150 may be smaller than the area of each of the front portion 120 and the rear portion 130.

The case 100 may further include the open portion 160. The open portion 160 according to embodiments of the present disclosure may be a space surrounded by upper ends of the front portion 120, the rear portion 130, the first side portion 140, and the second side portion 150. The open portion 160 may connect an inner space and an outer space of the case 100 to one another. Accordingly, the case 100 according to embodiments of the present disclosure may have a rectangular parallelepiped form with an open upper side.

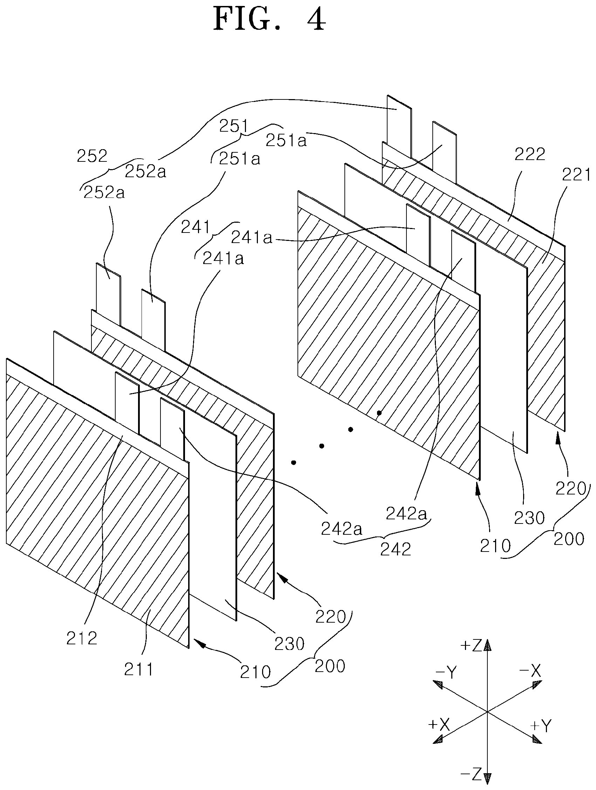

FIG. 4 is a view schematically illustrating a configuration of an electrode assembly according to embodiments of the present disclosure.

Referring to FIGS. 2 to 4, the electrode assembly 200 according to embodiments of the present disclosure may include a first electrode 210, a second electrode 220, a separator 230, a first tab member 240, and a second tab member 250.

The first electrode 210, the separator 230, and the second electrode 220 may be provided as a plurality of first electrodes 210, a plurality of separators 230, and a plurality of second electrodes 220, respectively. An example in which the electrode assembly 200 has a stack form in which the plurality of first electrodes 210, the plurality of separators 230, and the plurality of second electrodes 220 are sequentially stacked in the third direction will be described herein. However, the electrode assembly 200 is not limited to such a form and may also be formed to have a form in which the first electrode 210, the separator 230, and the second electrode 220, which are stacked, are wound clockwise or counterclockwise about a winding axis.

The first electrode 210 may serve as any one of a positive electrode or a negative electrode of the electrode assembly 200. An example in which the first electrode 210 is a positive electrode of the electrode assembly 200 will be described herein. However, the first electrode 210 is not limited thereto and may also serve as a negative electrode of the electrode assembly 200.

The first electrode 210 according to embodiments of the present disclosure may be formed to have the form of foil including a metal material such as aluminum or an aluminum alloy. The type, size, shape, and the like of the first electrode 210 are not particularly limited as long as the first electrode 210 does not cause chemical changes to the secondary battery and has conductivity. A cross-sectional shape of the first electrode 210 may be changed to various shapes other than a rectangular shape illustrated in FIG. 4.

The first electrode 210 may be provided as a plurality of first electrodes 210. The plurality of first electrodes 210 may be arranged in the third direction between the front portion 120 and the rear portion 130 of the case 100. The number of first electrodes 210 may vary according to the charging capacity or the like of the secondary battery 2.

A first active material layer 211 may be applied on at least a portion of the first electrode 210. The first active material layer 211 may be applied on both surfaces of the first electrode 210, or unlike this, may be applied on only one surface of the first electrode 210.

In the embodiments, as the first electrode 210 serves as a positive electrode, the first active material layer 211 may include a positive electrode active material.

The positive electrode active material may be a compound capable of reversible intercalation and deintercalation of lithium (a lithiated intercalation compound). More specifically, one or more composite oxides of lithium and a metal selected from cobalt, manganese, nickel, iron, and combinations thereof may be used.

For example, the positive electrode active material may include at least any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM). Here, 0<x<1, 0<y<1, 0<z<1, and x+y+z=1 may be satisfied. The positive electrode active material may include only any one of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM) or may include any two or all of lithium iron phosphate (LiFePO₄, LFP), lithium manganese iron phosphate (LiMnFePO₄, LMFP), and lithium nickel cobalt manganese (LiNiₓCo_{y}Mn_{z}O₂, LNCM).

The first active material layer 211 may further include a positive electrode conductive additive.

The positive electrode conductive additive is used to impart conductivity to the first active material layer 211, and any electrically conductive material that does not cause chemical changes may be used as the positive electrode conductive additive. Examples of the positive electrode conductive additive may include carbon-based materials such as natural graphite, artificial graphite, carbon black, acetylene black, ketjen black, carbon fibers, carbon nanofibers, and carbon nanotubes, metal-based materials in the form of a metal powder or metal fibers and containing copper, nickel, aluminum, silver, and the like, conductive polymers such as polyphenylene derivatives, or a mixture thereof.

The first active material layer 211 may further include a positive electrode binder.

The positive electrode binder serves to ensure that particles constituting the positive electrode active material are well adhered to one another and the positive electrode active material is well adhered to the first electrode 210.

As the positive electrode binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the positive electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder is a polymer material that can be fiberized and may be, for example, polytetrafluoroethylene, polyvinylidene fluoride, a polyvinylidene fluoride-hexafluoropropylene copolymer, polyethylene oxide, or a combination thereof.

The first electrode 210 may include a first blank portion 212 on which the first active material layer 211 is not applied. The first blank portion 212 according to embodiments of the present disclosure may be disposed in an upper end region of the first electrode 210 that is disposed toward the open portion 160 inside the case 100. However, the first blank portion 212 is not limited to such a form and may also be formed across the entire edge region of the first electrode 210.

The second electrode 220 may serve as the other of a positive electrode and a negative electrode of the electrode assembly 200. An example in which the second electrode 220 is a negative electrode of the electrode assembly 200 will be described herein. However, the second electrode 220 is not limited thereto and may also serve as a positive electrode of the electrode assembly 200.

The second electrode 220 may be provided as a plurality of second electrodes 220. The plurality of second electrodes 220 may be arranged in the third direction between the front portion 120 and the rear portion 130 of the case 100. The first electrodes 210 and the second electrodes 220 may be alternately disposed in the third direction. The second electrodes 220 may be spaced at predetermined intervals from the first electrodes 210 in the third direction.

The second electrode 220 according to embodiments of the present disclosure may be formed to have the form of foil including a metal material such as copper, a copper alloy, nickel, or a nickel alloy. The type, size, shape, and the like of the second electrode 220 are not particularly limited as long as the second electrode 220 does not cause chemical changes to the secondary battery 2 and has conductivity. A cross-sectional shape of the second electrode 220 may be changed to various shapes other than a rectangular shape illustrated in FIG. 4.

A second active material layer 221 may be applied on at least a portion of the second electrode 220. The second active material layer 221 may be applied on both surfaces of the second electrode 220, or unlike this, may be applied on only one surface of the second electrode 220.

As the second electrode 220 serves as a negative electrode, the second active material layer 221 may include a negative electrode active material.

The negative electrode active material may include a material capable of reversible intercalation/deintercalation of lithium ions, lithium metal, a lithium metal alloy, a material capable of doping and dedoping lithium, or a transition metal oxide.

The material capable of reversible intercalation/deintercalation of lithium ions is a carbon-based negative electrode active material, and may include, for example, crystalline carbon, amorphous carbon, or a combination thereof. Examples of the crystalline carbon may include graphite such as natural graphite or artificial graphite that is irregularly shaped, plate-shaped, flake-shaped, spherical, or fibrous, and examples of the amorphous carbon may include soft carbon, hard carbon, mesophase pitch carbide, and calcinated coke.

An alloy of the lithium metal may include lithium metal and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may be silicon, a silicon-carbon composite, SiOₓ (0 < x < 2), a Si-Q alloy (where Q is selected from alkali metals, alkali earth metals, Group 13 elements, Group 14 elements (excluding Si), Group 15 elements, Group 16 elements, transition metals, rare earth elements, and combinations thereof), or a combination thereof. The Sn-based negative electrode active material may be Sn, SnO₂, a Sn-based alloy, or a combination thereof.

The silicon-carbon composite may be a composite of silicon and amorphous carbon. According to embodiments, the silicon-carbon composite may have a form including a silicon particle and amorphous carbon coated on a surface of the silicon particle. For example, the silicon-carbon composite may include a secondary particle (core) in which silicon primary particles are assembled and an amorphous carbon coating layer (shell) located on a surface of the secondary particle. The amorphous carbon may also be located between the silicon primary particles. For example, the silicon primary particles may be coated with amorphous carbon. The secondary particle may be present by being dispersed in an amorphous carbon matrix.

The silicon-carbon composite may further include crystalline carbon. For example, the silicon-carbon composite may include a core including crystalline carbon and a silicon particle and an amorphous carbon coating layer located on a surface of the core.

The Si-based negative electrode active material or Sn-based negative electrode active material may be used by being mixed with a carbon-based negative electrode active material.

The second active material layer 221 may further include a negative electrode conductive additive and a negative electrode binder.

The negative electrode conductive additive is used to impart conductivity to the second active material layer 221, and any electrically conductive material that does not cause chemical changes may be used as the negative electrode conductive additive. Examples of the negative electrode conductive additive may include carbon-based materials such as natural graphite, artificial graphite, carbon black, acetylene black, ketjen black, carbon fibers, carbon nanofibers, and carbon nanotubes, metal-based materials in the form of a metal powder or metal fibers and containing copper, nickel, aluminum, silver, and the like, conductive polymers such as polyphenylene derivatives, or a mixture thereof.

The negative electrode binder serves to ensure that particles constituting the negative electrode active material are well adhered to one another and the negative electrode active material is well adhered to the second electrode 220.

As the negative electrode binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, and a combination thereof.

When the aqueous binder is used as the negative electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder is a polymer material that can be fiberized and may be, for example, polytetrafluoroethylene, polyvinylidene fluoride, a polyvinylidene fluoride-hexafluoropropylene copolymer, polyethylene oxide, or a combination thereof.

The second electrode 220 may include a second blank portion 222 on which the second active material layer 221 is not applied. The second blank portion 222 according to embodiments of the present disclosure may be disposed in an upper end region of the second electrode 220 that is disposed toward the open portion 160 inside the case 100. However, the second blank portion 222 is not limited to such a form and may also be formed across the entire edge region of the second electrode 220.

The separator 230 may be disposed between the first electrode 210 and the second electrode 220. The separator 230 may perform a function of preventing a short circuit of the first electrode 210 and the second electrode 220 while allowing movement of lithium ions between the first electrode 210 and the second electrode 220.

The separator 230 may be disposed to entirely surround a surface region of the electrode assembly 200. Accordingly, the separator 230 may prevent the first electrode 210 and the second electrode 220 from being directly exposed to the outside of the electrode assembly 200.

Polyethylene, polypropylene, polyvinylidene fluoride, or a multi-layer film of two or more thereof may be used as the separator 230, or a mixed multi-layer film such as a polyethylene/polypropylene double-layer separator, a polyethylene/polypropylene/polyethylene triple-layer separator, and a polypropylene/polyethylene/polypropylene triple-layer separator may also be used as the separator 230.

The separator 230 may include a porous base and a coating layer located on one surface or both surfaces of the porous base and including an organic material, an inorganic material, or a combination thereof.

The porous base may be a polymer membrane formed of any one polymer selected from the group consisting of a polyolefin such as polyethylene or polypropylene, a polyester such as polyethylene terephthalate or polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present by being mixed in a single coating layer or may be present in a form in which a coating layer including the organic material and a coating layer including the inorganic material are stacked.

The first tab member 240 may be connected to the first electrode 210 and may protrude to the outside of the electrode assembly 200. The first tab member 240 may extend in the first direction (+Z-axis direction) from the first electrode 210. The first tab member 240 may extend from the first electrode 210 toward a first connection member 320 (which will be described herein). As the first electrode 210 serves as a positive electrode, the first tab member 240 may serve as a positive electrode tab of the secondary battery 2. However, the first tab member 240 is not limited thereto, and when the first electrode 210 is a negative electrode, the first tab member 240 may serve as a negative electrode tab of the secondary battery 2.

The second tab member 250 may be connected to the second electrode 220 and may protrude to the outside of the electrode assembly 200. The second tab member 250 may extend in the first direction (+Z-axis direction) from the second electrode 220. The second tab member 250 may extend from the second electrode 220 toward a second connection member 360 (which will be described herein). As the second electrode 220 serves as a negative electrode, the second tab member 250 may serve as a negative electrode tab of the secondary battery 2. However, the second tab member 250 is not limited thereto, and when the second electrode 220 is a positive electrode, the second tab member 250 may serve as a positive electrode tab of the secondary battery 2.

Thee first tab member 240 and the second tab member 250 may be spaced in the second direction. The second tab member 250 may be disposed to be spaced a predetermined distance from the first tab member 240 in the second direction. The first tab member 240 and the second tab member 250 may be sequentially disposed in the second direction.

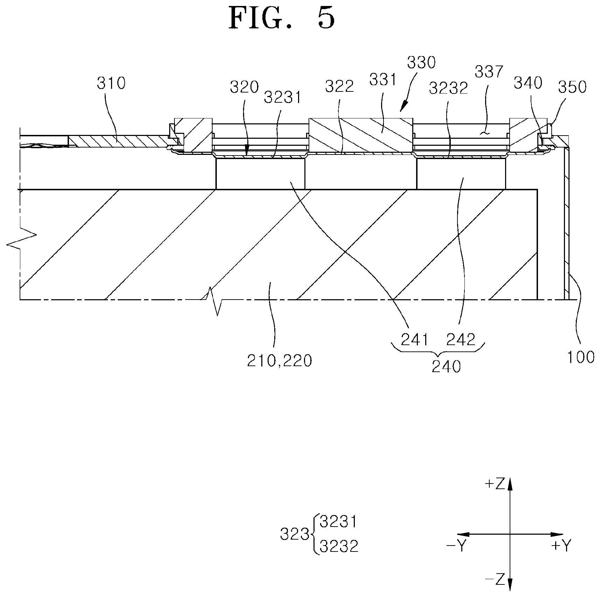

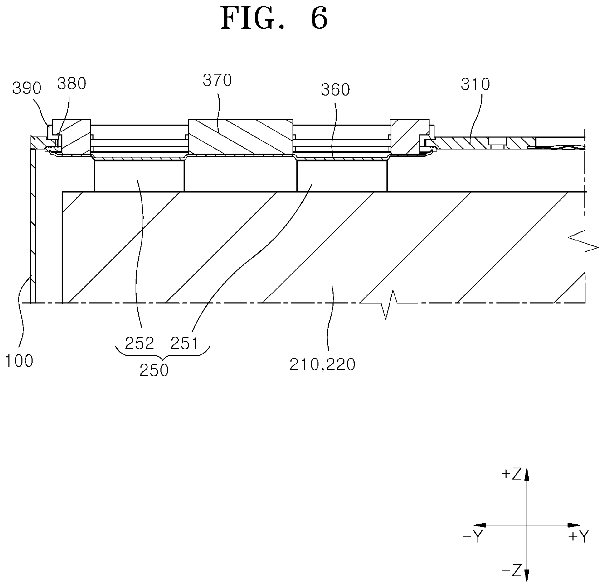

FIG. 5 is a main enlarged view schematically illustrating configurations of a first tab member, a first connection member, and a first terminal according to embodiments of the present disclosure, and FIG. 6 is a main enlarged view schematically illustrating configurations of a second tab member, a second connection member, and a second terminal according to embodiments of the present disclosure. For convenience of description, FIGS. 5 and 6 illustrate a state in which an insulating plate 400 (which will be described herein) is omitted.

Referring to FIGS. 3 to 6, a distance from the first side portion 140 to the first tab member 240 may be smaller than a distance from the second side portion 150 to the first tab member 240. That is, the first tab member 240 may be disposed at a position relatively closer to the first side portion 140 than the second side portion 150 based on a central portion of the electrode assembly 200 that faces a vent 3112 inside the case 100.

A distance from the second side portion 150 to the second tab member 250 may be smaller than a distance from the first side portion 140 to the second tab member 250. That is, the second tab member 250 may be disposed at a position relatively closer to the second side portion 150 than the first side portion 140 based on the central portion of the electrode assembly 200 that faces the vent 3112 inside the case 100.

The first tab member 240 according to embodiments of the present disclosure may include a first inner tab member 241 and a first outer tab member 242.

The first inner tab member 241 and the first outer tab member 242 may extend in the first direction from the first electrode 210. For example, the first inner tab member 241 and the first outer tab member 242 may extend toward the cap plate assembly 300 inside the case 100.

The first inner tab member 241 and the first outer tab member 242 may be spaced in the second direction. A distance from the first side portion 140 to the first outer tab member 242 may be smaller than a distance from the first side portion 140 to the first inner tab member 241. Accordingly, in the embodiments, the first outer tab member 242 and the first inner tab member 241 may be sequentially disposed in the second direction from the first side portion 140.

The first inner tab member 241 according to embodiments of the present disclosure may include a plurality of first inner tabs 241a.

The first inner tab 241a according to embodiments of the present disclosure may have the form of foil that extends in the first direction from the first blank portion 212 of the first electrode 210. The first inner tab 241a may have a substantially rectangular shape. However, the shape of the first inner tab 241a is not limited thereto and may be changed to various other shapes.

The first inner tab 241a may be integrally formed with the first electrode 210. For example, the first inner tab 241a may be a region of the first blank portion 212 that remains after a partial region of the first blank portion 212 is cut or removed by a notching process or the like. Unlike this, the first inner tab 241a may be manufactured separately from the first electrode 210 and then connected to the first blank portion 212 by welding or the like. A material of the first inner tab 241a may be the same as a material of the first electrode 210.

The number of first inner tabs 241a may be equal to the number of first electrodes 210. Each first inner tab 241a may individually extend from the first blank portion 212 of a different first electrode 210. The plurality of first inner tabs 241a may be stacked in the third direction. The plurality of first inner tabs 241a may be disposed parallel to one another. Accordingly, the first inner tab member 241 according to embodiments of the present disclosure may be a group of the plurality of first inner tabs 241a stacked in the third direction. The first inner tabs 241a neighboring one another may come into contact with one another or may be spaced from one another.

The first outer tab member 242 according to embodiments of the present disclosure may include a plurality of first outer tabs 242a.

The first outer tab 242a according to embodiments of the present disclosure may have the form of foil that extends in the first direction from the first blank portion 212 of the first electrode 210. The first outer tab 242a may have a substantially rectangular shape. However, the shape of the first outer tab 242a is not limited thereto and may be changed to various other shapes. The shape and area of the first outer tab 242a may be equal to those of the first inner tab 241a or may be configured to be different from those of the first inner tab 241a.

The first outer tab 242a and the first inner tab 241a may be spaced in the second direction. For example, the first outer tab 242a and the first inner tab 241a may be sequentially disposed in the second direction on the first blank portion 212.

The first outer tab 242a may be integrally formed with the first electrode 210. For example, the first outer tab 242a may be a region of the first blank portion 212 that remains after a partial region of the first blank portion 212 is cut or removed by a notching process or the like. Unlike this, the first outer tab 242a may be manufactured separately from the first electrode 210 and then connected to the first blank portion 212 by welding or the like. A material of the first outer tab 242a may be the same as the material of the first electrode 210.

The number of first outer tabs 242a may be equal to the number of first electrodes 210. Each first outer tab 242a may individually extend from the first blank portion 212 of a different first electrode 210. The plurality of first outer tabs 242a may be stacked in the third direction. The plurality of first outer tabs 242a may be disposed parallel to one another. Accordingly, the first outer tab member 242 according to embodiments of the present disclosure may be a group of the plurality of first outer tabs 242a stacked in the third direction. The first outer tabs 242a neighboring one another may come into contact with one another or may be spaced a thickness of the separator 230 from one another.

The second tab member 250 according to embodiments of the present disclosure may include a second inner tab member 251 and a second outer tab member 252.

The second inner tab member 251 and the second outer tab member 252 may extend in the first direction from the second electrode 220. For example, the second inner tab member 251 and the second outer tab member 252 may extend toward the cap plate assembly 300 inside the case 100.

The second inner tab member 251 and the second outer tab member 252 may be spaced in the second direction. A distance from the second side portion 150 to the second outer tab member 252 may be smaller than a distance from the second side portion 150 to the second inner tab member 251. Accordingly, in the embodiments, the second outer tab member 252 and the second inner tab member 251 may be sequentially disposed in the opposite direction of the second direction from the second side portion 150.

The second inner tab member 251 according to embodiments of the present disclosure may include a plurality of second inner tabs 251a.

The second inner tab 251a according to embodiments of the present disclosure may have the form of foil that extends in the first direction from the second blank portion 222 of the second electrode 220. The second inner tab 251a may have a substantially rectangular shape. However, the shape of the second inner tab 251a is not limited thereto and may be changed to various other shapes.

The second inner tab 251a may be integrally formed with the second electrode 220. For example, the second inner tab 251a may be a region of the second blank portion 222 that remains after a partial region of the second blank portion 222 is cut or removed by a notching process or the like. Unlike this, the second inner tab 251a may be manufactured separately from the second electrode 220 and then connected to the second blank portion 222 by welding or the like. A material of the second inner tab 251a may be the same as a material of the second electrode 220.

The number of second inner tabs 251a may be equal to the number of second electrodes 220. Each second inner tab 251a may individually extend from the second blank portion 222 of a different second electrode 220. The plurality of second inner tabs 251a may be stacked in the third direction. The plurality of second inner tabs 251a may be disposed parallel to one another. Accordingly, the second inner tab member 251 according to embodiments of the present disclosure may be a group of the plurality of second inner tabs 251a stacked in the third direction. The second inner tabs 251a neighboring one another may come into contact with one another or may be spaced from one another.

The second outer tab member 252 according to embodiments of the present disclosure may include a plurality of second outer tabs 252a.

The second outer tab 252a according to embodiments of the present disclosure may have the form of foil that extends in the first direction from the second blank portion 222 of the second electrode 220. The second outer tab 252a may have a substantially rectangular shape. However, the shape of the second outer tab 252a is not limited thereto and may be changed to various other shapes. The shape and area of the second outer tab 252a may be equal to those of the second inner tab 251a or may be configured to be different from those of the second inner tab 251a.

The second outer tab 252a and the second inner tab 251a may be spaced in the second direction. For example, the second outer tab 252a and the second inner tab 251a may be sequentially disposed in the opposite direction of the second direction on the second blank portion 222.

The second outer tab 252a may be integrally formed with the second electrode 220. For example, the second outer tab 252a may be a region of the second blank portion 222 that remains after a partial region of the second blank portion 222 is cut or removed by a notching process or the like. Unlike this, the second outer tab 252a may be manufactured separately from the second electrode 220 and then connected to the second blank portion 222 by welding or the like. A material of the second outer tab 252a may be the same as the material of the second electrode 220.

The number of second outer tabs 252a may be equal to the number of second electrodes 220. Each second outer tab 252a may individually extend from the second blank portion 222 of a different second electrode 220. The plurality of second outer tabs 252a may be stacked in the third direction. The plurality of second outer tabs 252a may be disposed parallel to one another. Accordingly, the second outer tab member 252 according to embodiments of the present disclosure may be a group of the plurality of second outer tabs 252a stacked in the third direction. The second outer tabs 252a neighboring one another may come into contact with one another or may be spaced from one another.

The cap plate assembly 300 according to various embodiments of the present disclosure will be described herein.

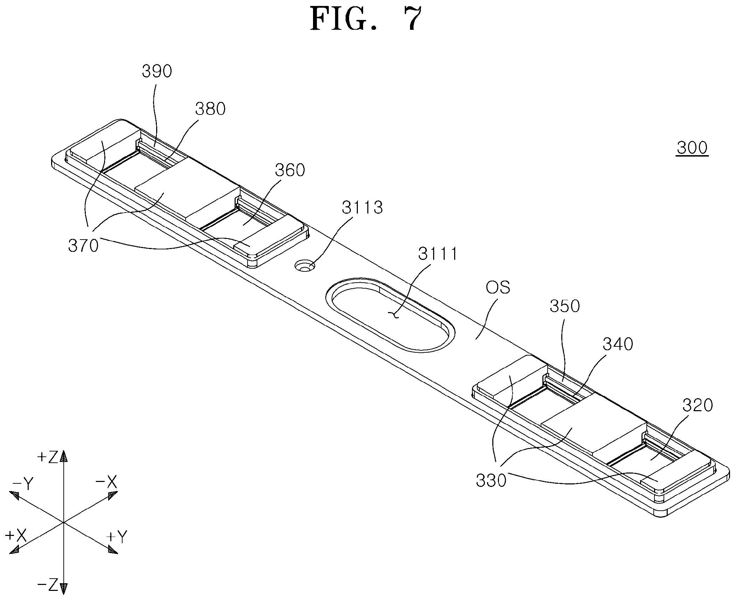

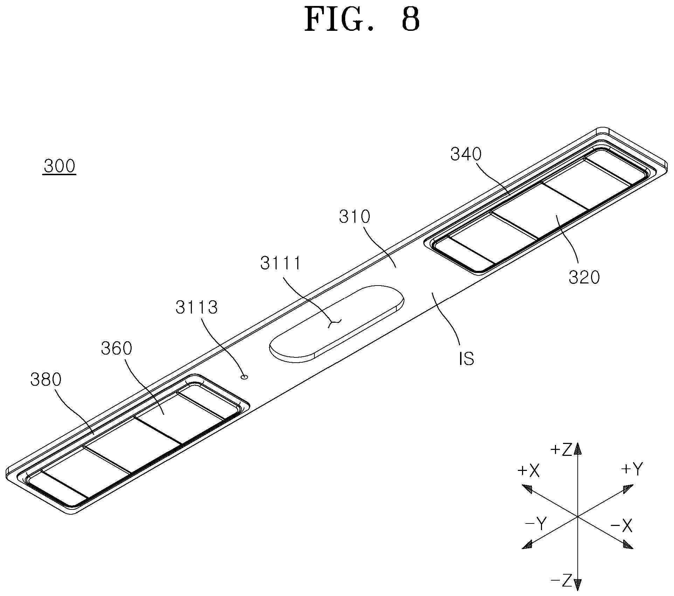

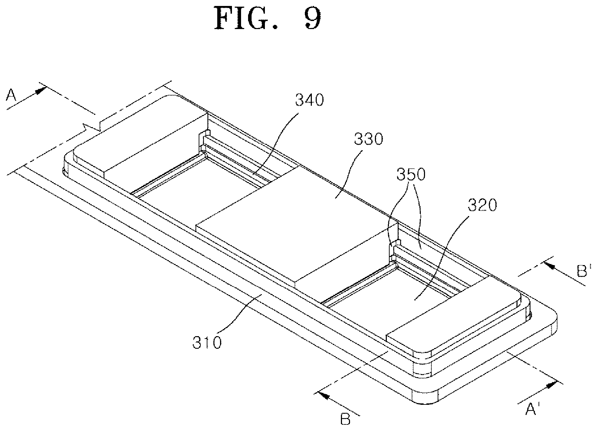

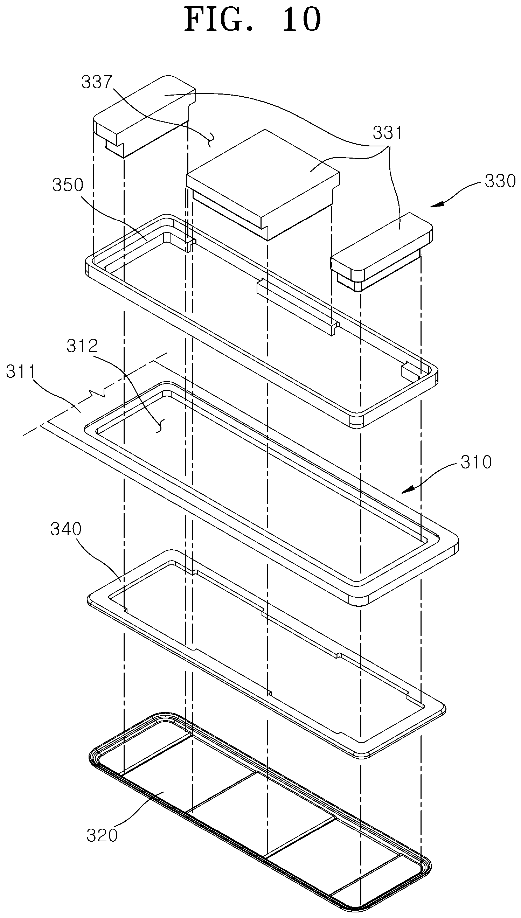

FIGS. 7 and 8 are perspective views schematically illustrating a cap plate assembly according to embodiments of the present disclosure, FIG. 9 is an enlarged view of portions of the cap plate assembly where the first connection member and the first terminal are disposed according to embodiments of the present disclosure, and FIG. 10 is a main exploded perspective view of FIG. 9.

Referring to FIGS. 7 to 10, the cap plate assembly 300 according to embodiments of the present disclosure includes a cap plate 310, the first connection member 320, and a first terminal 330. The cap plate assembly 300 may further include a first sealing member 340 and a first insulating member 350.

The cap plate 310 may have the form of a flat plate as a whole. Referring to FIG. 3, the cap plate 310 may be disposed at the open portion 160 of the case 100. The cap plate 310 may be disposed to face the bottom portion 110 of the case 100 in the first direction. That is, the cap plate 310 may be disposed at a position that is spaced a predetermined distance from the bottom portion 110 in the first direction. The cap plate 310 and the bottom portion 110 may be disposed parallel to one another.

The cap plate 310 may be seated on an upper end of the case 100, more specifically, upper ends of the front portion 120, the rear portion 130, the first side portion 140, and the second side portion 150. The cap plate assembly 300 may be coupled to the case 100 using various types of coupling methods such as welding, bolting, and fitting.

The insulating plate 400 may be disposed between the cap plate 310 and the electrode assembly 200 according to embodiments of the present disclosure. The insulating plate 400 may prevent direct contact between the cap plate 310 and the electrode assembly 200 and may insulate the cap plate 310 from the electrode assembly 200. The insulating plate 400 may fix the position of the electrode assembly 200 inside the case 100. The insulating plate 400 may prevent damage to the electrode assembly 200 when the cap plate 310 is deformed toward an inner side of the case 100 due to external impact or the like.

The insulating plate 400 according to embodiments of the present disclosure may be disposed to face the electrode assembly 200 in the first direction inside the case 100. That is, the electrode assembly 200, the insulating plate 400, and the cap plate assembly 300 may be sequentially disposed in the first direction. The insulating plate 400 may be fixed to the case 100 using various types of coupling methods such as fitting, welding, bolting, and adhering. The insulating plate 400 may be made of an insulating material such as polyethylene (PE), polypropylene (PP), polyethylene terephthalate (PET), and rubber.

A first terminal hole 312 may be formed to pass through the cap plate 310. The first connection member 320 and the first terminal 330 may be installed at the first terminal hole 312. The first connection member 320 may be installed on an inner side surface IS of the cap plate 310, and the first terminal 330 may be installed on an outer side surface OS of the cap plate 310. The first connection member 320 and the first terminal 330 may come into contact with one another through the first terminal hole 312.

In the description of the present disclosure, the inner side surface IS is a surface toward an inner space surrounded by the case 100. In the description of the present disclosure, the outer side surface OS is a surface toward an outer space exposed to the outside while assembled to the case 100 or a surface toward the opposite side of the inner side surface IS.

The first connection member 320 may have the form of a flat plate as a whole and may be installed on the inner side surface IS of the cap plate 310. An outer side surface OS of the first connection member 320 may come into contact with the first sealing member 340 and the first terminal 330. An inner side surface IS of the first connection member 320 may be electrically connected to the first electrode 210 by coming into contact with the first tab member 240. The first connection member 320 may serve as a configuration that provides electrical connection between the first terminal 330 and the first tab member 240. The first connection member 320 may be formed of an electrically conductible material such as copper, aluminum, or nickel.

The first terminal 330 may have the form of a flat plate or a block and may be installed on the outer side surface OS of the cap plate 310. The first terminal 330 may come into contact with the first connection member 320 through the first terminal hole 312 formed in the cap plate 310. The first terminal 330 may serve as a configuration that provides electrical connection between the busbar 3 or an external power device and the first electrode 210 of the secondary battery 2.

The first terminal 330 according to the embodiments may be formed of an electrically conductible material such as aluminum, nickel, or copper. The first terminal 330 may protrude to the outside of the cap plate 310. For example, the first terminal 330 may be disposed on the outer side surface OS of the cap plate 310 that faces the outer space of the case 100.

One surface of the first terminal 330 may be disposed to face the first terminal hole 312. The one surface of the first terminal 330 may be disposed to face the first connection member 320 through the first terminal hole 312. Although the drawings illustrate that the first terminal hole 312 has a quadrangular shape, and the first terminal 330 has a quadrangular cross-sectional shape as a whole to correspond thereto, the overall shape of the first terminal 330 is not limited thereto and may be changed to various other shapes such as a circular shape, an elliptical shape, and a polygonal shape.

The first terminal 330 may be electrically connected to the first electrode 210 by the first connection member 320 that will be described herein. Accordingly, the first terminal 330 may serve as a positive electrode terminal of the secondary battery 2. The busbar 3 may be seated on an upper surface of the first terminal 330. The busbar 3 and the first terminal 330 may be integrally bonded by laser welding or the like.

The first sealing member 340 may be disposed between the cap plate 310 and the first connection member 320. The first sealing member 340 may serve as a configuration for preventing leakage of an electrolyte from inside the case 100. The first sealing member 340 may be disposed between the cap plate 310 and the first connection member 320 and may prevent the electrolyte inside the case 100 from leaking between the inner side surface IS of the cap plate 310 and an outer side surface OS of the first connection member 320.

The first sealing member 340 may serve as a configuration for electrically insulating the cap plate 310 and the first connection member 320 from one another. The first sealing member 340 according to the embodiments may be made of an insulating material such as PE, PP, PET, and rubber. The first sealing member 340 may be disposed to surround an edge portion of the first connection member 320 that faces the cap plate 310.

The first insulating member 350 may be disposed between the cap plate 310 and the first terminal 330. The first insulating member 350 may serve as a configuration for electrically insulating the cap plate 310 and the first terminal 330 from one another. The first insulating member 350 according to the embodiments may be made of an insulating material such as PE, PP, PET, and rubber. The first insulating member 350 may be disposed to surround an edge portion of the first terminal 330 that faces the cap plate 310.

The first sealing member 340 and the first insulating member 350 according to the present disclosure are each not limited to a specific structure and shape as long as the first sealing member 340 is able to insulate between the cap plate 310 and the first connection member 320, and the first insulating member 350 is able to insulate between the cap plate 310 and the first terminal 330. Although the drawings of the present disclosure illustrate a structure in which the first sealing member 340 and the first insulating member 350 are separately manufactured and then assembled respectively to the inner side surface IS and the outer side surface OS of the cap plate 310, the structure of the first sealing member 340 and the first insulating member 350 is not limited thereto.

The first sealing member 340 and the first insulating member 350 may have a structure in which they are integrally connected to one another and constitute a single product and may be fitted to an edge portion of the first terminal hole 312. In addition, at least one of the first sealing member 340 and the first insulating member 350 may be manufactured to be integrally coupled to the cap plate 310 by insert injection molding, etc.

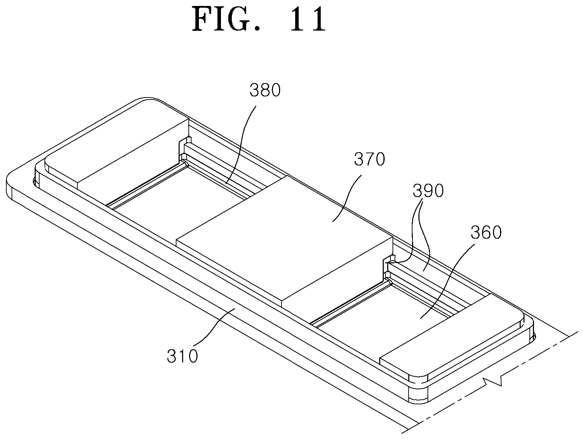

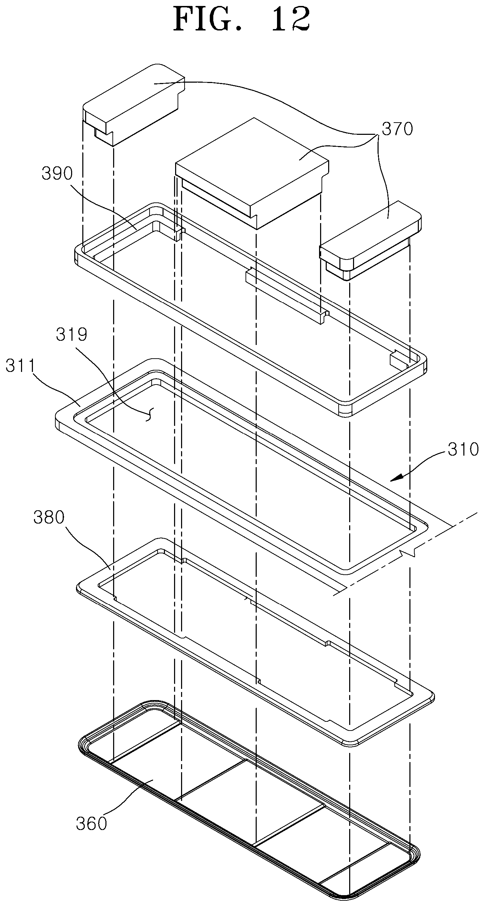

FIG. 11 is an enlarged view of portions of the cap plate assembly where the second connection member and the second terminal are disposed according to embodiments of the present disclosure, and FIG. 12 is a main exploded perspective view of FIG. 11.

Referring to FIGS. 11 and 12, the cap plate assembly 300 according to embodiments of the present disclosure may further include the second connection member 360, a second terminal 370, a second sealing member 380, and a second insulating member 390.

A second terminal hole 319 may be further formed in the cap plate 310. The first terminal hole 312 and the second terminal hole 319 may be spaced in the second direction. The second terminal hole 319 may be disposed to be spaced a predetermined distance from the first terminal hole 312 in the second direction. The first terminal hole 312 and the second terminal hole 319 may be sequentially disposed in the second direction.

The second connection member 360 and the second terminal 370 may be installed at the second terminal hole 319. The second connection member 360 may be installed on the inner side surface IS of the cap plate 310, and the second terminal 370 may be installed on the outer side surface OS of the cap plate 310. The second connection member 360 and the second terminal 370 may come into contact with one another through the second terminal hole 319.

The second connection member 360 may have the form of a flat plate as a whole and may be installed on the inner side surface IS of the cap plate 310. An outer side surface OS of the second connection member 360 may come into contact with second sealing member 380 and the second terminal 370. An inner side surface IS of the second connection member 360 may be electrically connected to the second electrode 220 by coming into contact with the second tab member 250. The second connection member 360 may serve as a configuration that provides electrical connection between the second terminal 370 and the second tab member 250. The second connection member 360 may be formed of an electrically conductible material such as copper, aluminum, or nickel.

The second terminal 370 may have the form of a flat plate or a block and may be installed on the outer side surface OS of the cap plate 310. The second terminal 370 may come into contact with the second connection member 360 through the second terminal hole 319 formed in the cap plate 310. The second terminal 370 may serve as a configuration that provides electrical connection between the busbar 3 or an external power device and the second electrode 220 of the secondary battery 2.

The second terminal 370 according to the embodiments may be formed of an electrically conductible material such as aluminum, nickel, or copper. The second terminal 370 may protrude to the outside of the cap plate 310. For example, the second terminal 370 may be disposed on the outer side surface OS of the cap plate 310 that faces the outer space of the case 100.

One surface of the second terminal 370 may be disposed to face the second terminal hole 319. The one surface of the second terminal 370 may be disposed to face the second connection member 360 through the second terminal hole 319. Although the drawings illustrate that the second terminal hole 319 has a quadrangular shape, and the second terminal 370 has a quadrangular cross-sectional shape as a whole to correspond thereto, the overall shape of the second terminal 370 is not limited thereto and may be changed to various other shapes such as a circular shape, an elliptical shape, and a polygonal shape.

The second terminal 370 may be electrically connected to the second electrode 220 by the second connection member 360 that will be described herein. Accordingly, the second terminal 370 may serve as a negative electrode terminal of the secondary battery 2. The busbar 3 may be seated on an upper surface of the second terminal 370. The busbar 3 and the second terminal 370 may be integrally bonded by laser welding or the like.

The first terminal 330 and the second terminal 370 may be spaced in the second direction on the cap plate 310. For example, the second terminal 370 may be disposed at a position that is spaced a predetermined distance from the first terminal 330 in the second direction.

The second sealing member 380 may be disposed between the cap plate 310 and the second connection member 360. The second sealing member 380 may serve as a configuration for electrically insulating the cap plate 310 and the second connection member 360 from one another. The second sealing member 380 according to the embodiments may be made of an insulating material such as PE, PP, PET, and rubber. The second sealing member 380 may be disposed to surround an edge portion of the second connection member 360 that faces the cap plate 310. A lower end of the second sealing member 380 may be located in an inner space of the case 100. The second sealing member 380 may serve as a configuration for preventing leakage of an electrolyte from inside the case 100.

The second insulating member 390 may be disposed between the cap plate 310 and the second terminal 370. The second insulating member 390 may serve as a configuration for electrically insulating the cap plate 310 and the second terminal 370 from one another. The second insulating member 390 according to the embodiments may be made of an insulating material such as PE, PP, PET, and rubber. The second insulating member 390 may be disposed to surround an edge portion of the second terminal 370 that faces the cap plate 310.

The second sealing member 380 and the second insulating member 390 according to the present disclosure are each not limited to a specific structure and shape as long as the second sealing member 380 is able to insulate between the cap plate 310 and the second connection member 360, and the second insulating member 390 is able to insulate between the cap plate 310 and the second terminal 370. Although the drawings of the present disclosure illustrate a structure in which the second sealing member 380 and the second insulating member 390 are separately manufactured and then assembled respectively to the inner side surface IS and the outer side surface OS of the cap plate 310, the structure of the second sealing member 380 and the second insulating member 390 is not limited thereto.

The second sealing member 380 and the second insulating member 390 may have a structure in which they are integrally connected to one another and constitute a single product and may be fitted to an edge portion of the second terminal hole 319. In addition, at least one of the second sealing member 380 and the second insulating member 390 may be manufactured to be integrally coupled to the cap plate 310 by insert injection molding, etc.

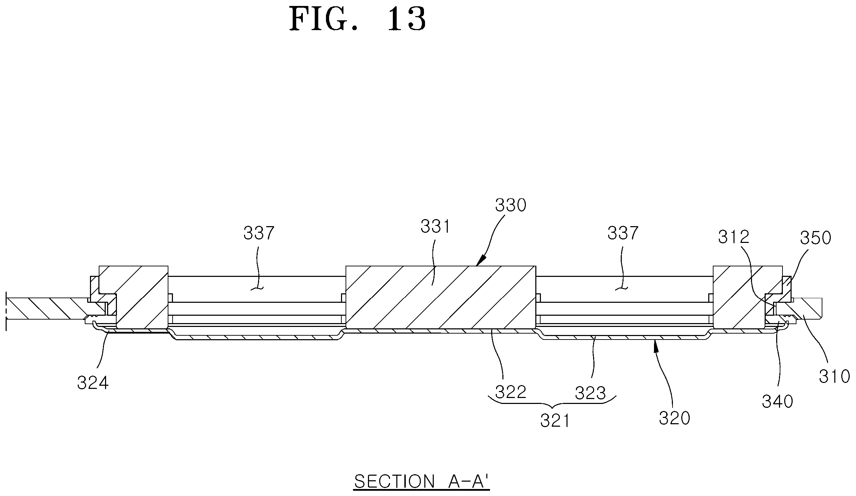

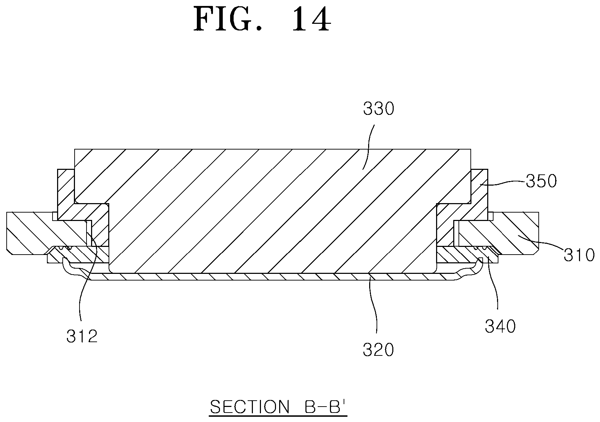

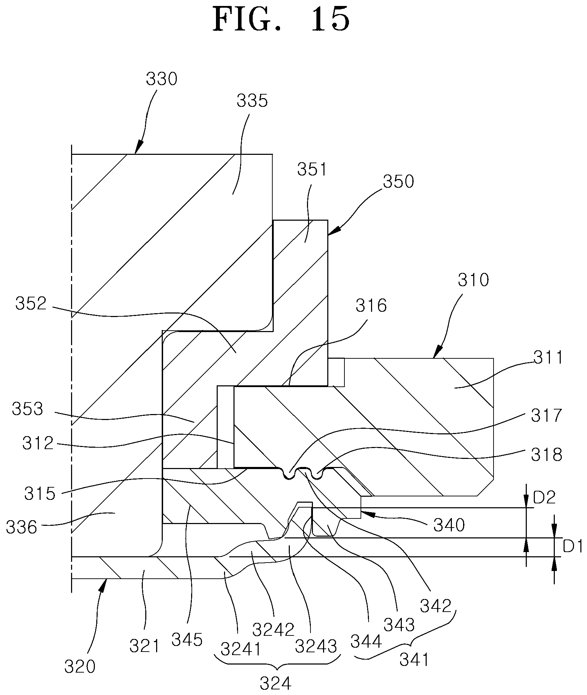

FIG. 13 is a cross-sectional view along line A-A' of FIG. 9, FIG. 14 is a cross-sectional view along line B-B' of FIG. 9, and FIG. 15 is an enlarged view of a portion of FIG. 14.

Referring to FIGS. 13 to 15, the first connection member 320 and the first terminal 330 may come into contact with one another with the cap plate 310 disposed therebetween. Contact portions between the first connection member 320 and the first terminal 330 may be bonded to one another. The first connection member 320 and the first terminal 330 may be bonded to one another with the cap plate 310 disposed therebetween and may be integrally joined to the cap plate 310.

The first connection member 320 and the first terminal 330 may be made of different materials and may be bonded to one another by ultrasonic fusion. For example, the first connection member 320 may be made of a material containing copper (Cu) as its main material, the first terminal 330 may be made of a material containing aluminum (Al) as its main material, and the first connection member 320 and the first terminal 330 may be welded to one another by ultrasonic fusion.

The first sealing member 340 may be disposed between the cap plate 310 and the first connection member 320, and the first insulating member 350 may be disposed between the cap plate 310 and the first terminal 330. The first terminal 330 and the first connection member 320 may be bonded to one another with the cap plate 310, the first sealing member 340, and the first insulating member 350 disposed therebetween and may be integrally joined to the cap plate 310, the first sealing member 340, and the first insulating member 350.

Here, the first sealing member 340 may come into close contact with the inner side surface IS of the cap plate 310 due to a bonding force between the first connection member 320 and the first terminal 330. The first insulating member 350 may come into close contact with the outer side surface OS of the cap plate 310 due to the bonding force between the first connection member 320 and the first terminal 330. The first sealing member 340 and the first insulating member 350 may come into close contact with one another due to the bonding force between the first connection member 320 and the first terminal 330.

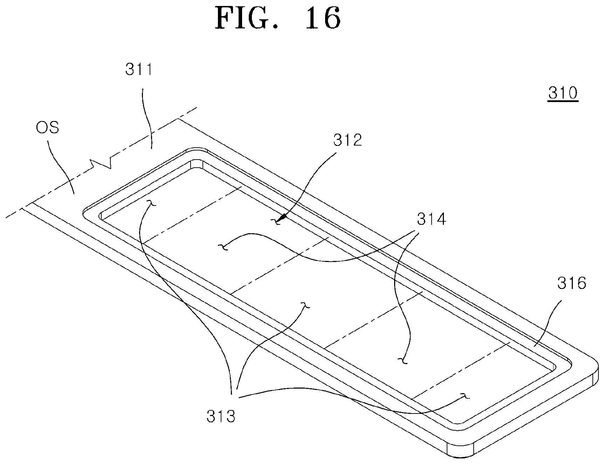

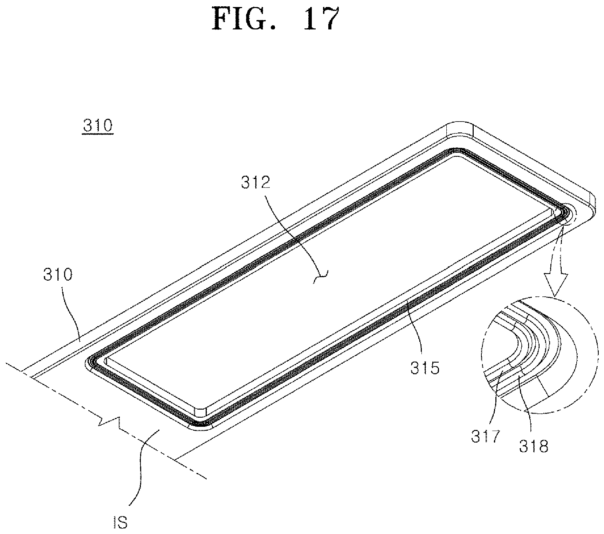

FIGS. 16 and 17 are main perspective views schematically illustrating a cap plate according to embodiments of the present disclosure.

Referring to FIGS. 16 and 17, the cap plate 310 according to embodiments of the present disclosure may include a cap plate body 311, the first terminal hole 312, a first assembly groove 315, a second assembly groove 316, a first protruding portion 317, a second protruding portion 318, and the second terminal hole 319.

The cap plate body 311 is a component forming a basic framework of the cap plate 310 and may have the form of a flat plate as a whole. The cap plate body 311 may have a shape corresponding to the open portion 160 of the case 100 and may be disposed to cover the open portion 160. An edge portion of the cap plate body 311 may come into contact with an edge portion of the case 100 and may be coupled to the case 100 to seal the inside of the case 100. The cap plate body 311 may be coupled to the case 100 using various types of coupling methods such as welding, bolting, and fitting.

The first terminal hole 312 may be formed to pass through the cap plate body 311. The cap plate body 311 may have the form of a flat plate that has a width in the second direction and the third direction. The first terminal hole 312 may be formed to pass through the cap plate body 311 in the first direction.

The first connection member 320 may be installed in the first terminal hole 312 at an inner side surface IS of the cap plate body 311, and the first terminal 330 may be installed in the first terminal hole 312 at an outer side surface OS of the cap plate body 311. The first connection member 320 and the first terminal 330 may come into contact with one another through the first terminal hole 312.

The first terminal hole 312 according to embodiments of the present disclosure may include a first terminal bonding hole 313 and a first tab bonding hole 314.

The first terminal bonding hole 313 is a portion where the first terminal 330 is installed, and one or more first terminal bonding holes 313 may be formed. The first terminal 330 may be disposed to cover or pass through a portion of the first terminal hole 312. The first terminal 330 may be formed of a single member or may have a structure divided into a plurality of first terminal blocks 331. When the first terminal 330 has the structure divided into the plurality of first terminal blocks 331, the first terminal bonding holes 313 may each be formed at a position corresponding to one of the plurality of first terminal blocks 331. A plurality of first terminal bonding holes 313 may be disposed to be spaced from one another.

The first tab bonding hole 314 is a portion where the first terminal 330 is not installed, and one or more first tab bonding holes 314 may be formed. The first connection member 320 may be exposed to the outside of the cap plate 310 through the first tab bonding holes 314. Energy for coupling the first connecting member 320 to the first tab member 240 may reach the first connecting member 320 from the outside of the cap plate assembly 300 through the first tab bonding holes 314.

The first tab bonding holes 314 may be formed continuously with the first terminal bonding holes 313. When the number of first terminal bonding holes 313 is one, one or more first tab bonding holes 314 may be provided and disposed adjacent to the first terminal bonding hole 313. The first tab bonding holes 314 may be located in between a plurality of first terminal bonding holes 313 and may be alternately disposed with the plurality of first terminal bonding holes 313. When the number of first terminal bonding holes 313 is two, the first tab bonding hole 314 may be located between the two first terminal bonding holes 313. When the number of first terminal bonding holes 313 is three or more, a plurality of first tab bonding holes 314 may be formed, and the plurality of first tab bonding holes 314 may be alternately disposed with the plurality of first terminal bonding holes 313.

One or more first terminal bonding holes 313 and one or more first tab bonding holes 314 may be alternately disposed in a direction in which the first connection member 320 extends. The first connection member 320 may extend in the second direction, and one or more first terminal bonding holes 313 and one or more first tab bonding holes 314 may be alternately disposed in the second direction.

The first assembly groove 315 is a portion where the first sealing member 340 is seated on and assembled to the cap plate body 311, and may be formed to be recessed from the inner side surface IS of the cap plate body 311. The first assembly groove 315 may be formed to extend along the edge portion of the first terminal hole 312. When the first terminal hole 312 has a quadrangular shape as a whole, the first assembly groove 315 may be formed in the shape of a quadrangular ring along the edge portion of the first terminal hole 312.

The first assembly groove 315 may have a shape corresponding to the first sealing member 340, and the first sealing member 340 may be assembled by being fitted to the first assembly groove 315. A corner may be formed at a boundary portion between an outer edge portion of the first assembly groove 315 and an inner side surface IS of the cap plate body 311. An inner edge portion of the first assembly groove 315 may be continuous with the first terminal hole 312.

In a state in which the first sealing member 340 is seated on the first assembly groove 315, an outer edge portion of the first sealing member 340 may come into contact with the outer edge portion of the first assembly groove 315 and may be exposed to the inner side surface IS side of the cap plate body 311. The first assembly groove 315 may be formed to be recessed from the cap plate body 311 in the first direction, and movement of the first sealing member 340 in the second direction and the third direction may be restrained due to the first sealing member 340 being caught at the outer edge portion of the first assembly groove 315. The outer edge portion of the first assembly groove 315 may serve as a wall or a stopper that restrains movement of the first sealing member 340.

The second assembly groove 316 is a portion where the first insulating member 350 is seated on and assembled to the cap plate body 311, and may be formed to be recessed from the outer side surface OS of the cap plate body 311. The second assembly groove 316 may be formed to extend along the edge portion of the first terminal hole 312. When the first terminal hole 312 has a quadrangular shape as a whole, the second assembly groove 316 may be formed in the shape of a quadrangular ring along the edge portion of the first terminal hole 312.

The second assembly groove 316 may have a shape corresponding to the first insulating member 350, and the first insulating member 350 may be assembled by being fitted to the second assembly groove 316. A corner may be formed at a boundary portion between an outer edge portion of the second assembly groove 316 and the outer side surface OS of the cap plate body 311. An inner edge portion of the second assembly groove 316 may be continuous with the first terminal hole 312.

In a state in which the first insulating member 350 is seated on the second assembly groove 316, an outer edge portion of the first insulating member 350 may come into contact with the outer edge portion of the second assembly groove 316 and may be exposed to the outer side surface OS side of the cap plate body 311. The second assembly groove 316 may be formed to be recessed from the cap plate body 311 in the opposite direction of the first direction, and movement of the first insulating member 350 in the second direction and the third direction may be restrained due to the first insulating member 350 being caught at the outer edge portion of the second assembly groove 316.

An inner edge portion of the first sealing member 340 may be exposed or protrude from the first terminal hole 312. An inner edge portion of the first insulating member 350 may be exposed or protrude from the first terminal hole 312. The inner edge portion of the first sealing member 340 and the inner edge portion of the first insulating member 350 may come into contact while facing one another in the first direction in the first terminal hole 312.

The first protruding portion 317 may be formed to protrude from the first assembly groove 315 and may come into contact with the first sealing member 340. The first protruding portion 317 may be formed to continuously extend in a linear form along the first assembly groove 315. The first sealing member 340 may, while coming into surface contact with the first assembly groove 315, come into line contact with the first protruding portion 317 in a tighter manner.

The second protruding portion 318 may be formed to protrude from the first assembly groove 315 and may come into contact with the first sealing member 340 at a position spaced from the first protruding portion 317. The second protruding portion 318 may be formed to continuously extend in a linear form along the first assembly groove 315 and may be disposed in parallel with the first protruding portion 317 while spaced therefrom.

The first sealing member 340 may, while coming into surface contact with the first assembly groove 315, come into line contact with the first protruding portion 317 and the second protruding portion 318 in a tighter manner. The first sealing member 340 may come into line contact with the cap plate 310 in a multi-layer manner due to the first protruding portion 317 and the second protruding portion 318. The first protruding portion 317 and the second protruding portion 318 may come into pressure contact with the first sealing member 340. Accordingly, a portion between the outer side surface OS of the first sealing member 340 and the first assembly groove 315 can be hermetically sealed, and the electrolyte inside the case 100 can be prevented from leaking between the inner side surface IS of the cap plate 310 and the outer side surface OS of the first sealing member 340.

The second terminal hole 319 may be formed to pass through the cap plate body 311. The cap plate body 311 may have the form of a flat plate that has a width in the second direction and the third direction, and the second terminal hole 319 may be formed to pass through the cap plate body 311 in the first direction. The second terminal hole 319 may be disposed to be spaced a predetermined distance from the first terminal hole 312 in the second direction.

The second connection member 360 may be installed in the second terminal hole 319 at the inner side surface IS of the cap plate body 311, and the second terminal 370 may be installed in the second terminal hole 319 at the outer side surface OS of the cap plate body 311. The second connection member 360 and the second terminal 370 may come into contact with one another through the second terminal hole 319.

The second terminal hole 319 according to embodiments of the present disclosure may have a structure that is the same as or corresponds to a structure of the first terminal hole 312. The second terminal hole 319 may have a structure that is the same as or corresponds to a structure of the first terminal hole 312 including the first terminal bonding hole 313 and the first tab bonding hole 314. In addition, components that are the same as or correspond to the first assembly groove 315, the second assembly groove 316, the first protruding portion 317, and the second protruding portion 318 may be formed on an edge portion of the second terminal hole 319.

Therefore, the description of the structure and action of the second terminal hole 319 will be substituted with the detailed description of the first terminal hole 312. In addition, the description of the structures and actions of the first assembly groove 315, the second assembly groove 316, the first protruding portion 317, and the second protruding portion 318 formed on the edge portion of the second terminal hole 319 will be substituted with the detailed description of the first assembly groove 315, the second assembly groove 316, the first protruding portion 317, and the second protruding portion 318 formed on the edge portion of the first terminal hole 312.

A vent hole 3111, the vent 3112, and an electrolyte inlet 3113 may be formed in the cap plate 310 according to the embodiments.

The vent hole 3111 according to the embodiments may be formed to have the form of a hole that vertically passes through the cap plate 310 in the first direction. The vent hole 3111 may serve as a configuration that provides a path through which flame, gas, smoke, etc., formed inside the case 100 are discharged to the outside of the case 100 during thermal runaway of the secondary battery 2 caused by overcurrent or the like. A cross-sectional shape of the vent hole 3111 may be changed to various shapes such as an elliptical shape, a circular shape, and a polygonal shape.

The vent 3112 may be installed at the vent hole 3111 and may be opened or closed in association with a change in an internal pressure of the case 100. That is, during a normal operation of the secondary battery 2, the vent 3112 may close the vent hole 3111 to block leakage of an electrolyte or the like inside the case 100 to the outside of the case 100 or introduction of moisture, foreign matter, or the like into the case 100. During thermal runaway of the secondary battery 2, the vent 3112 may open the vent hole 3111 to induce discharge of the flame, gas, smoke, etc., formed inside the case 100 to the outside of the case 100.

The vent 3112 according to the embodiments may be formed to have a substantially plate-like form. The vent 3112 may be fixed to the cap plate 310 using various types of coupling methods such as welding, bolting, and fitting. The vent 3112 may be disposed inside the vent hole 3111 or may be disposed to face the vent hole 3111 in the first direction at an upper side or a lower side of the cap plate 310.

A thickness of the vent 3112 parallel to the first direction may be smaller than a thickness of the cap plate 310. Accordingly, the vent 3112 may easily rupture or break when the internal pressure of the case 100 increases. The vent 3112 may include a notch formed to be concave toward an inner side of the vent 3112 so that the vent 3112 breaks first when the internal pressure of the case 100 increases.

An electrolyte may be injected into the case 100 through the electrolyte inlet 3113. The electrolyte inlet 3113 may be formed to pass through the cap plate 310 and may have a sealing cap installed thereon. The electrolyte inlet 3113 may be disposed to be spaced a predetermined distance from the vent hole 3111 in the second direction or the direction opposite to the second direction.

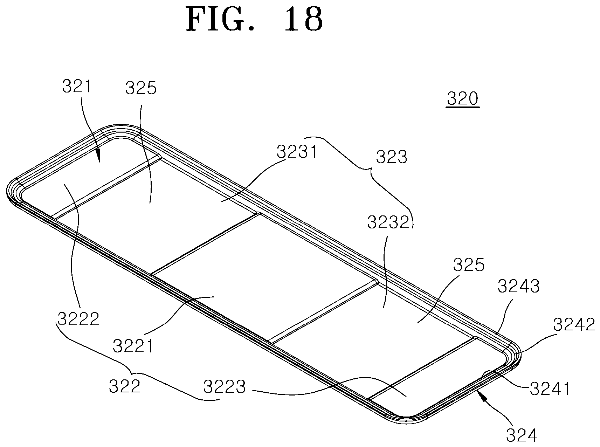

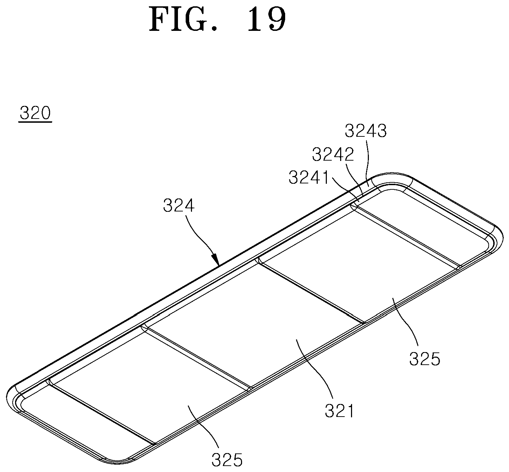

FIGS. 18 and 19 are main perspective views schematically illustrating the first connection member according to embodiments of the present disclosure.

Referring to FIGS. 18 and 19, the first connection member 320 according to embodiments of the present disclosure may include a first connection body 321, a first support body 324, and a first groove 325.

The first connection body 321, which is a portion forming a basic framework of the first connection member 320, may have the form of a flat plate as a whole and may be disposed at the inner side surface IS side of the cap plate 310. The first connection body 321 may have a shape and width that correspond to the first terminal hole 312. The first connection body 321 may face the first terminal hole 312 and may come into contact with the first tab member 240 at the inner side surface IS side of the first connection member 320.

The first connection body 321 may be disposed between the first terminal 330 and the electrode assembly 200. The first connection body 321 may have the form of a flat plate that is disposed perpendicular to the first direction. The first connection body 321 may come into contact with the first terminal 330 at the inner side surface IS side of the cap plate 310 and may be electrically connected to the first terminal 330. The first connection body 321 and the first terminal 330 may be integrally bonded by ultrasonic fusion or the like.

An inner side surface IS of the first connection body 321 may be disposed to face the first inner tab member 241 and the first outer tab member 242. An outer side surface OS of the first connection body 321 may be disposed to face an inner side surface IS of the first terminal 330 that is disposed toward the inner space of the case 100.

The first connection body 321 according to embodiments of the present disclosure may include a first terminal connection plate 322 and a first tab connection plate 323.

The first terminal connection plate 322 is a portion of the first connection body 321 that comes into contact with the first terminal 330, and may have a width and shape that correspond to the first terminal 330. At least a portion of the first terminal connection plate 322 may be welded to the first terminal 330. An outer side surface OS of the first terminal connection plate 322 may come into contact with the inner side surface IS of the first terminal 330 and may be covered by the first terminal 330. The first terminal connection plate 322 may have a width and shape that correspond to the inner side surface IS of the first terminal 330.

The first terminal 330 may be formed of a single member or may have the structure divided into the plurality of first terminal blocks 331. When the first terminal 330 has the structure divided into the plurality of first terminal blocks 331, the first terminal connection plate 322 may be formed at a position corresponding to each of the plurality of first terminal blocks 331. A plurality of first terminal connection plates 322 may be disposed to be spaced from one another.

The first terminal connection plate 322 according to embodiments of the present disclosure may include a first block connection portion 3221, a second block connection portion 3222, and a third block connection portion 3223.

The first block connection portion 3221 may come into contact with the first terminal 330 between a first inner tab connection portion 3231 and a first outer tab connection portion 3232 (which will be described herein after). The second block connection portion 3222 may be disposed to be spaced from the first block connection portion 3221 with the first inner tab connection portion 3231 disposed therebetween. The third block connection portion 3223 may be disposed to be spaced from the first block connection portion 3221 with the first outer tab connection portion 3232 disposed therebetween.

The third block connection portion 3223, the first block connection portion 3221, and the second block connection portion 3222 may be sequentially disposed in the second direction on the first terminal hole 312. The first block connection portion 3221, the second block connection portion 3222, and the third block connection portion 3223 may each come into contact with one of the plurality of first terminal blocks 331 at positions spaced from one another. The first block connection portion 3221, the second block connection portion 3222, and the third block connection portion 3223 may be welded to the plurality of first terminal blocks 331.

The first tab connection plate 323 is a portion of the first connection body 321 that comes into contact with the first tab member 240, and may have a width and shape that correspond to the first tab member 240. At least a portion of the first tab connection plate 323 may be welded to the first tab member 240. An outer side surface OS of the first tab connection plate 323 may be exposed to the outside of the cap plate 310 through the first terminal hole 312, and an inner side surface IS of the first tab connection plate 323 may face the first tab member 240.

When the number of first terminal connection plates 322 is one, one or more first tab connection plates 323 may be provided and disposed adjacent to the first terminal connection plate 322. The first tab connection plates 323 may be located in between a plurality of first terminal connection plates 322 disposed to be spaced from one another and may be alternately disposed with the plurality of first terminal connection plates 322. When the number of first terminal connection plates 322 is two, the first tab connection plate 323 may be located between the two first terminal connection plates 322. When the number of first terminal connection plates 322 is three or more, a plurality of first tab connection plates 323 may be formed, and the plurality of first tab connection plates 323 may be alternately disposed with the plurality of first terminal connection plates 322.

One or more first terminal connection plates 322 and one or more first tab connection plates 323 may be alternately disposed in the direction in which the first connection member 320 extends. The first connection member 320 may extend in the second direction, and one or more first terminal connection plates 322 and one or more first tab connection plates 323 may be alternately disposed in the second direction.

The first tab connection plate 323 according to embodiments of the present disclosure may include the first inner tab connection portion 3231 and the first outer tab connection portion 3232.

The first inner tab connection portion 3231 may come into contact with the first inner tab member 241. An inner side surface IS of the first inner tab connection portion 3231 may be located in the first direction from the first inner tab member 241 and may face the first inner tab member 241. The first outer tab connection portion 3232 may come into contact with the first outer tab member 242. An inner side surface IS of the first outer tab connection portion 3232 may be located in the first direction from the first outer tab member 242 and may face the first outer tab member 242.

The first outer tab connection portion 3232 may be disposed to be spaced from the first inner tab connection portion 3231. The first outer tab member 242 may be located to be spaced a predetermined distance from the first inner tab member 241 in the opposite direction of the second direction, and correspondingly, the first outer tab connection portion 3232 may be disposed to be spaced a predetermined distance from the first inner tab connection portion 3231 in the opposite direction of the second direction.

The first inner tab connection portion 3231 and the first outer tab connection portion 3232 may be disposed to be spaced from one another in the second direction with the first block connection portion 3221 disposed therebetween and may come into contact with the first inner tab member 241 and the first outer tab member 242, respectively. An inner side surface IS of the first inner tab connection portion 3231 and an inner side surface IS of the first outer tab connection portion 3232 may be welded to the first inner tab member 241 and the first outer tab member 242, respectively, by bonding energy (for example, a laser L or the like) that has reached each of the inner side surfaces IS from an outer side surface OS side.

The first support body 324 may be integrally formed with an edge portion of the first connection body 321 and may face the inner side surface IS of the cap plate 310. The first support body 324 may have a shape and width that correspond to the edge portion of the first terminal hole 312. The first support body 324 may be formed to continuously extend in a band shape along the edge portion of the first connection body 321. The first support body 324 may be located on edge portions of the first connection body 321 that are in the second direction, the opposite direction of the second direction, the third direction, and the opposite direction of the third direction.

The first support body 324 may face the first assembly groove 315 at the edge portion of the first terminal hole 312 and may come into contact with an inner side surface IS of the first sealing member 340 that is fitted to the first assembly groove 315. The first support body 324 may have a form that is bent from the first connection body 321, which has the form of a flat plate as a whole, toward the cap plate 310.

The first connection member 320, the first sealing member 340, and the cap plate 310 may be sequentially disposed in the first direction, and the first support body 324 may have a form that protrudes to be bent by as much as a predetermined protruding width from the first connection body 321 in the first direction. The first support body 324 may be formed to be bent in the first direction that is different from directions in which the first connection body 321 extends (the second direction and the third direction).

By forming the first support body 324 in a bent form at the edge portion of the first connection body 321 as described herein, bending stiffness of the first connection member 320 may be strengthened. By forming the first support body 324 to be bent in the first direction relative to the first connection body 321, the first support body 324 may come into line contact with the first sealing member 340 in the first direction in a tight manner. Accordingly, the electrolyte inside the case 100 can be prevented from leaking between the outer side surface OS of the first connection member 320 and the inner side surface IS of the first sealing member 340.

A portion between the outer side surface OS of the first sealing member 340 and the first assembly groove 315 can be hermetically sealed, and the electrolyte inside the case 100 can be prevented from leaking between the inner side surface IS of the cap plate 310 and the outer side surfaces OS of the first connection member 320 and the first sealing member 340.

The first support body 324 according to embodiments of the present disclosure may include a first bent portion 3241, a second bent portion 3242, and a third bent portion 3243.

The first bent portion 3241 may have a form that is bent in the first direction from an edge of the first connection body 321. The second bent portion 3242 may be connected to the first bent portion 3241 and may have a form that is bent in a direction different from the first direction. The second bent portion 3242 may be bent in different directions(for example, the second direction, the opposite direction of the second direction, the third direction, and the opposite direction of the third direction) depending on the position. The third bent portion 3243 may be connected to the second bent portion 3242 and may have a form that is bent in the first direction.

The first bent portion 3241 may have a first protruding width D1 in the first direction, and the third bent portion 3243 may have a second protruding width D2 in the first direction. The first support body 324 may have a form that protrudes by as much as a sum of the first protruding width D1 and the second protruding width D2 from the first connection body 321 in being formed to have a predetermined protruding width from the first connection body 321 in the first direction.

The first bent portion 3241, the second bent portion 3242, and the third bent portion 3243 may be disposed to sequentially continue from the edge of the first connection body 321. The first support body 324 may have a shape that is curved in a multi-layer manner due to the first bent portion 3241, the second bent portion 3242, and the third bent portion 3243. As the first support body 324 has a shape that is curved in a multi-layer manner in the first direction, the first support body 324 may be elastically deformed flexibly depending on a load while remaining in tight elastic contact with the first sealing member 340 in the first direction.

When a load acts on the first connection body 321 in the first direction, a bending form of the first support body 324 may be elastically changed. For example, relative positions of the first bent portion 3241 and the third bent portion 3243 in the first direction may be changed. Accordingly, it is possible to prevent the plastic deformation of the first support body 324 caused by a load that acts when ultrasonic fusion is performed on the first connection member 320 and the first terminal 330, which could otherwise lead to a decrease in a contact pressure between the first support body 324 and the first sealing member 340 or formation of a gap between the first support body 324 and the first sealing member 340.

The first groove 325 may be formed to be concave toward the first tab member 240 in the first tab connection plate 323 that is in contact with the first tab member 240. The first groove 325 may be formed in the form of a groove in one portion or an entirety of the first tab connection plate 323, and one or more first grooves 325 may be formed. A plurality of first grooves 325 may be provided, and the plurality of first grooves 325 may be arranged at predetermined intervals in the second direction. The first grooves 325 may be formed in a linear form extending in the second direction or the third direction or may be formed in a plate-shaped form or a form of another figure.

In the drawings of the present disclosure, the first grooves 325 are illustrated as having a plate-shaped form that corresponds to the first tab connection plate 323. The first tab connection plate 323 may include the first inner tab connection portion 3231 and the first outer tab connection portion 3232, and the first groove 325 may be formed in each of the first inner tab connection portion 3231 and the first outer tab connection portion 3232. The first grooves 325 may have a plate-shaped form that corresponds to the first inner tab connection portion 3231 and the first outer tab connection portion 3232.

A plurality of welding lines (not illustrated) connected to the first tab member 240 may be formed on the first grooves 325. The welding lines may integrally connect the first tab member 240 and the first connection member 320 stacked in the first direction. The welding lines may be a mixture of the first connection member 320 and the first tab member 240 that is melted and hardened due to heat generated during laser welding. The welding lines may be disposed on bottom surfaces of the first grooves 325.

By forming the first grooves 325 in the first tab connection plate 323, the first tab connection plate 323 may be placed to be closer to the first tab member 240 than the first terminal connection plate 322. Accordingly, bondability between the first tab connection plate 323 and the first tab member 240 can be further improved.

In addition, by forming the first grooves 325 to have a form corresponding to the first tab connection plate 323, a corner may be formed between the first tab connection plate 323 and the first terminal connection plate 322. Accordingly, it is possible to clearly distinguish between portions where the first terminal 330 is connected and assembled and portions where the first tab member 240 is connected and assembled. It is possible to clearly distinguish positions, and regions of and boundaries between the plurality of first tab connection plates 323 and first terminal connection plates 322 that are disposed continuously and alternately with one another. Therefore, assembly between the first terminal 330 and the first connection member 320 may be more easily and accurately performed.

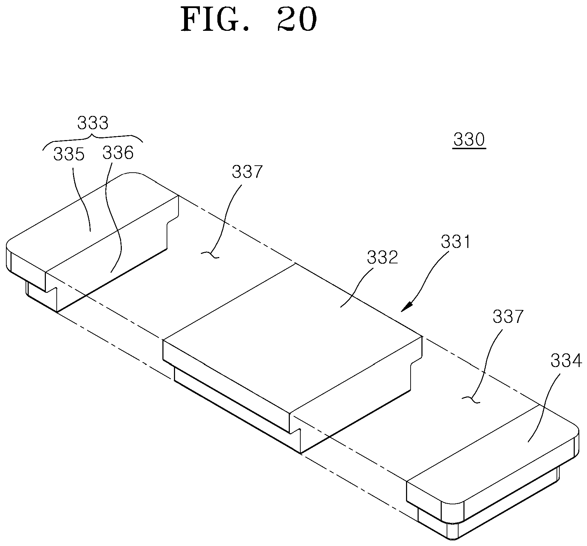

FIG. 20 is a perspective view schematically illustrating the first terminal according to embodiments of the present disclosure.

Referring to FIG. 20, the first terminal 330 according to embodiments of the present disclosure may include the first terminal block 331 and a first opening 337.

The first terminal block 331 may have the form of a three-dimensional block that has a smaller width in the second direction than the first terminal hole 312. The first terminal block 331 may be disposed at a predetermined position in the first terminal hole 312 and may face the first connection member 320. A plurality of first terminal blocks 331 may be provided, and the plurality of first terminal blocks 331 may be disposed to be spaced from one another in the first terminal hole 312.

A sum of widths of the plurality of first terminal blocks 331 may be smaller than the width of the first terminal hole 312. A sum of the widths of the plurality of first terminal blocks 331 in the second direction may be smaller than the width of the first terminal hole 312 in the second direction. Accordingly, the plurality of first terminal blocks 331 may be disposed to be spaced in the second direction in the first terminal hole 312.

The first opening 337 may be formed to be open between adjacent first terminal blocks 331. The first terminal 330 according to the present disclosure may have a structure in which only one portion of the first terminal hole 312 is covered by the first terminal block 331 and the first opening 337 is formed in another portion of the first terminal hole 312, instead of the entire first terminal hole 312 being covered by the first terminal block 331.

The first opening 337 may be a hollow space portion formed between the plurality of first terminal blocks 331. Bonding energy transferred between the plurality of first terminal blocks 331 may directly reach the first connection member 320 through the first opening 337 and may enable the first connection member 320 to be bonded to the first tab member 240.

The first terminal block 331 according to embodiments of the present disclosure may include a first block piece 332, a second block piece 333, and a third block piece 334.

In being disposed in the first terminal hole 312, the first terminal 330 may be disposed to be spaced and distributed at three locations that correspond to the first block piece 332, the second block piece 333, and the third block piece 334. Accordingly, the first terminal 330 may stably come into contact with the busbar 3 and the first connection member 320 at the three locations corresponding to the first block piece 332, the second block piece 333, and the third block piece 334.

The first block piece 332, the second block piece 333, and the third block piece 334 may each have a width that can cover the first terminal hole 312 in the third direction and may each have a smaller width than the first terminal hole 312 in the second direction. The third block piece 334, the first block piece 332, and the second block piece 333 may be sequentially disposed in the second direction in the first terminal hole 312.

The first block piece 332 may be disposed in a middle portion of the first terminal hole 312 in the second direction. The first block piece 332 may come into contact with the first block connection portion 3221 of the first connection member 320. The first block connection portion 3221 may be located between the first inner tab connection portion 3231 and the first outer tab connection portion 3232, and the first block piece 332 and the first block connection portion 3221 may be bonded to one another between the first inner tab connection portion 3231 and the first outer tab connection portion 3232.

The second block piece 333 may be disposed to be spaced a predetermined distance in the second direction from the first block piece 332. The second block piece 333 may be disposed to be spaced from the first block piece 332 in the first terminal hole 312, and the first opening 337 may be formed between the first block piece 332 and the second block piece 333. The first opening 337 may be formed to be open in the first direction at a position that corresponds to the first inner tab connection portion 3231.

The second block piece 333 may be disposed to be spaced from the first block piece 332 with the first inner tab connection portion 3231 disposed therebetween. The second block piece 333 may come into contact with the second block connection portion 3222 of the first connection member 320. The second block connection portion 3222 may be disposed to be spaced from the first block connection portion 3221 with the first inner tab connection portion 3231 disposed therebetween, and the second block piece 333 and the second block connection portion 3222 may come into contact with one another at a position in the second direction from the first inner tab connection portion 3231.

The third block piece 334 may be disposed to be spaced a predetermined distance from the first block piece 332 at the opposite side of the second block piece 333. The third block piece 334 may be disposed to be spaced from the first block piece 332 at the opposite side from the second block piece 333, and the first opening 337 may be formed between the first block piece 332 and the third block piece 334. The first opening 337 may be formed to be open in the first direction at a position that corresponds to the first outer tab connection portion 3232.

The third block piece 334 may be disposed to be spaced from the first block piece 332 with the first outer tab connection portion 3232 disposed therebetween. The third block piece 334 may come into contact with the third block connection portion 3223 of the first connection member 320. The third block piece 334 may be disposed to be spaced from the first block piece 332 with the first outer tab connection portion 3232 disposed therebetween, and the third block piece 334 and the third block connection portion 3223 may come into contact with one another at a position in the opposite direction of the second direction from the first outer tab connection portion 3232.

The first block piece 332, the second block piece 333, and the third block piece 334 may come into contact with the first block connection portion 3221, the second block connection portion 3222, and the third block connection portion 3223, respectively. The first block piece 332, the second block piece 333, and the third block piece 334 may be welded to the first block connection portion 3221, the second block connection portion 3222, and the third block connection portion 3223, respectively.

The first terminal block 331 according to embodiments of the present disclosure may include a first outer block 335 and a first inner block 336. The first block piece 332, the second block piece 333, and the third block piece 334 may each include the first outer block 335 and the first inner block 336.

The first outer block 335 is a portion that is disposed to protrude to the outside of the cap plate 310 when the first terminal 330 is assembled to the cap plate 310. The first outer block 335 may have a greater width than the first terminal hole 312 and may have an edge portion disposed to face the outer side surface OS of the cap plate 310. The first outer block 335 may have a greater width than the first terminal hole 312 in the third direction, and an end of the first outer block 335 in the third direction may be placed across or seated on the outer side surface OS of the cap plate 310 at the edge portion of the first terminal hole 312.

The first inner block 336 is a portion that extends from the first outer block 335 toward the first connection member 320. The first inner block 336 may have a smaller width in the third direction than the first outer block 335, may pass through the first terminal hole 312, and may extend toward the inner side surface IS of the cap plate 310. An end of the first inner block 336 that has passed through the first terminal hole 312 may come into contact with the first connection member 320. The end of the first inner block 336 may come into contact with the first block connection portion 3221, the second block connection portion 3222, and the third block connection portion 3223.

The first terminal 330 may stably come into contact with the busbar 3 or an external power device through the first outer block 335 at the three locations corresponding to the first block piece 332, the second block piece 333, and the third block piece 334.

The first terminal 330 according to the present disclosure is not limited to having the herein-described structure in which the three block pieces 332, 333, and 334 are disposed to be spaced from one another. The herein-described structure is embodiments of the first terminal 330 according to the present disclosure and is not intended to limit the structure of the first terminal 330 to a specific structure. The structure and shape of the first terminal 330 according to the present disclosure are not particularly limited as long as the first terminal 330 has a structure in which only one portion of the first terminal hole 312 is covered by the first terminal block 331 and the first opening 337 is formed in another portion of the first terminal hole 312,

A single first terminal block 331 that has a smaller width than in the third direction the first terminal hole 312 may be provided. The single first terminal block 331 may be disposed to cover only one portion of the first terminal hole 312 and may be disposed to lean toward one side of the first terminal hole 312 in the second direction or disposed in the middle portion of the first terminal hole 312. The first terminal block 331 may have a width that can cover the entire first terminal hole 312 and may have a structure in which the first opening 337 is formed in the form of a hole that passes through the first terminal block 331.

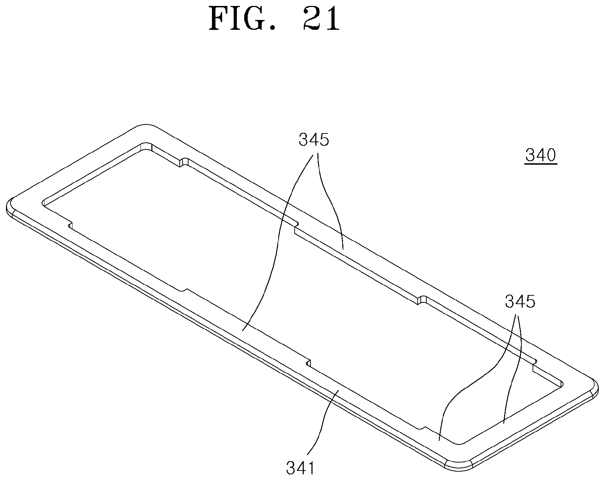

FIG. 21 is a perspective view schematically illustrating a first sealing member according to embodiments of the present disclosure.

Referring to FIG. 21, the first sealing member 340 according to embodiments of the present disclosure may include a first sealing portion 341 and a second sealing portion 345.

The first sealing portion 341 may have the shape of a band or a ring that extends along a circumference of the first terminal hole 312 and may be located between the cap plate 310 and the first connection member 320. The first sealing portion 341 may have a predetermined thickness that is thicker than a depth at which the first assembly groove 315 is recessed and may be fitted to the first assembly groove 315. An outer side surface OS of the first sealing portion 341 may come into contact with a recessed bottom surface of the first assembly groove 315, and an outer edge portion of the first sealing portion 341 may come into contact with an edge portion of the first assembly groove 315.

The first sealing portion 341 according to embodiments of the present disclosure may include a first close contact portion 342, a second close contact portion 343, and a second groove 344.

The first close contact portion 342 is a portion of the first sealing portion 341 that comes into close contact with the cap plate 310. The first close contact portion 342 may come into surface contact with the recessed bottom surface of the first assembly groove 315. The bottom surface of the first assembly groove 315 may have a flat shape, and an outer side surface OS of the first close contact portion 342 may have a flat shape corresponding thereto.

The first close contact portion 342 may have a thickness that is thicker than the depth at which the first assembly groove 315 is recessed. An inner side surface IS of the first close contact portion 342 may be located to protrude from the inner side surface IS of the cap plate 310. The second sealing portion 345 may be formed to protrude from the first close contact portion 342 toward the first terminal hole 312. The second sealing portion 345 may be integrally connected to the first close contact portion 342 and may have the same thickness as the first close contact portion 342.

The second close contact portion 343 is a portion of the first sealing portion 341 that comes into close contact with the first connection member 320. The second close contact portion 343 may be formed to protrude from the first close contact portion 342 toward the first connection member 320 and may come into contact with the first support body 324 of the first connection member 320. The first sealing member 340 may have a predetermined thickness obtained by adding a thickness of the second close contact portion 343 to the thickness of the first close contact portion 342.

The second close contact portion 343 may be formed to protrude at a position corresponding to an outer edge portion of the first support body 324. Contact between the first connection member 320 and the first sealing member 340 may most tightly occur in the first direction at the position corresponding to the second close contact portion 343 and the outer edge portion of the first support body 324.

The first sealing member 340 may be made of a material having elasticity. The first close contact portion 342 and the second close contact portion 343 may come into elastic contact with the cap plate 310 and the first connection member 320, respectively. Due to the elasticity of the first sealing member 340, airtightness between the cap plate 310 and the first connection member 320 can be more stably secured. The first support body 324 of the first connection member 320 may have elasticity by having the shape that is curved in a multi-layer manner. Because the elasticity of the first support body 324 may be added to the elasticity of the first sealing portion 341, the airtightness can be more stably secured.

The second groove 344 may be formed to be recessed in the first direction from the second close contact portion 343, and an edge of the first connection member 320 may be fitted to the second groove 344. The second groove 344 may be formed at a position that corresponds to the outer edge portion of the first support body 324 of the first connection member 320. The outer edge portion of the first support body 324 may be fitted to the second groove 344 and may tightly come into close contact with a recessed inner surface of the second groove 344 in multiple directions.

Because the second groove 344 is formed to be recessed in the first direction, contact between the first support body 324 and the first sealing member 340 may more tightly occur in the first direction on the second groove 344. In addition, because the second groove 344 is formed to be recessed in the first direction, the outer edge portion of the first support body 324 of the first connection member 320 may be guided and maintained in the first direction while fitted to the second groove 344. Accordingly, the edge portion of the first connection member 320 can be prevented from deviating to any position or being deformed into any form due to the load or the like acting in the first direction during ultrasonic fusion.

The second sealing portion 345 may be formed to protrude from the first sealing portion 341 toward the first terminal hole 312 and may face the first insulating member 350 fitted to the first terminal hole 312. The first sealing portion 341 may be formed to continue across the entire edge portion of the first terminal hole 312, and the second sealing portion 345 may be partially formed only at a position where the first terminal 330 is disposed.

The second sealing portion 345 may be formed at a position corresponding to the first terminal 330 and may stably insulate the first terminal 330 from the cap plate 310. The second sealing portion 345 is not formed at a position where the first terminal 330 is not disposed, that is, not formed at a position corresponding to the first opening 337, thereby minimizing covering of or interfering with the first opening 337. Accordingly, the quality of bonding through the first opening 337 can be stably secured.

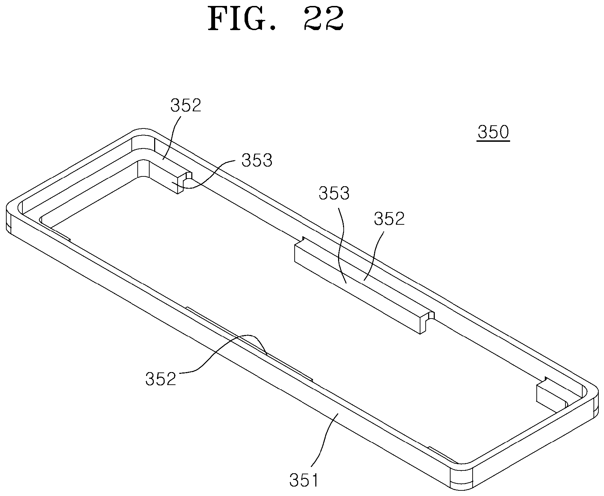

FIG. 22 is a perspective view schematically illustrating a first insulating member according to embodiments of the present disclosure.

Referring to FIG. 22, the first insulating member 350 according to embodiments of the present disclosure may include a first insulating portion 351, a second insulating portion 352, and a third insulating portion 353.

The first terminal 330 may include the first outer block 335 and the first inner block 336, and the first insulating portion 351, the second insulating portion 352, and the third insulating portion 353 may together form a shape that corresponds to circumferential surfaces of the first outer block 335 and the first inner block 336.

The first insulating portion 351 may have the shape of a band or a ring that extends along the circumference of the first terminal hole 312 and may be located between the first terminal 330 and the outer side surface OS of the cap plate 310. The first insulating portion 351 may have a cross-sectional shape that is upright in the first direction and may come into contact with the circumferential surface of the first outer block 335.

The first insulating portion 351 may have a length that is longer than a depth at which the second assembly groove 316 of the cap plate 310 is recessed in the first direction and may be fitted to the second assembly groove 316. An outer end of the first insulating portion 351 that is in the first direction may protrude and be exposed to the outside of the outer side surface OS of the cap plate 310. An inner end of the first insulating portion 351 that is in the opposite direction of the first direction may be inserted into the second assembly groove 316. The inner end of the first insulating portion 351 may be seated on a recessed bottom surface of the second assembly groove 316 and may have a circumferential surface that faces an edge portion of the second assembly groove 316(the circumferential surface of the inner end of the first insulating portion 351 and the edge portion of the second assembly groove 316 may contact with each other in some embodiments).

The circumferential surface of the first insulating portion 351 may be caught at the second assembly groove 316 and the outer side surface OS of the cap plate 310. When assembling the first insulating member 350 to the cap plate 310, by assembling the first insulating portion 351 to be caught at the edge portion of the second assembly groove 316, the first insulating member 350 can be easily and accurately assembled to a target position on the cap plate 310.

The second insulating portion 352 is a device portion that insulates the first outer block 335 from the cap plate 310 together with the first insulating portion 351. The second insulating portion 352 may be formed to protrude from the first insulating portion 351 toward the first terminal hole 312 and may be located between the outer side surface OS of the cap plate 310 and an inner side surface IS of the first outer block 335.

The first insulating portion 351 may be formed to continue across the entire edge portion of the first terminal hole 312, and the second insulating portion 352 may be partially formed only at a position where the first terminal 330 is disposed. The second insulating portion 352 may be formed to protrude in the second direction and the third direction from the inner end of the first insulating portion 351 toward the first terminal hole 312. An outer edge portion of the second insulating portion 352 may be integrally connected to the first insulating portion 351. An inner edge portion of the second insulating portion 352 may be located on an inner side of the first terminal hole 312.

When assembling the first insulating member 350 to the cap plate 310, the second insulating portion 352 may be disposed on the second assembly groove 316. The second insulating portion 352 may be fitted to the second assembly groove 316 and may be seated on the recessed bottom surface of the second assembly groove 316. The bottom surface of the second assembly groove 316 may have a flat shape, and an inner side surface IS of the second insulating portion 352 may have a flat shape corresponding thereto. An outer side surface OS of the second insulating portion 352 may come into contact with the inner side surface IS of the first outer block 335.

The third insulating portion 353 is a device portion that insulates the first inner block 336 from the cap plate 310. The third insulating portion 353 may be connected to the second insulating portion 352 and may be located between an edge of the first terminal hole 312 and the first inner block 336 of the first terminal 330. The third insulating portion 353 may be formed to protrude in the first direction from the second insulating portion 352 and may be fitted to the first terminal hole 312.

The third insulating portion 353 may have a cross-sectional shape that is upright in the first direction and may be fitted to the first terminal hole 312. An outer circumferential surface of the third insulating portion 353 may come into contact with the edge of the first terminal hole 312. An inner circumferential surface of the third insulating portion 353 may come into contact with a circumferential surface of the first inner block 336.

The third insulating portion 353 may be formed to protrude in the opposite direction of the first direction from an inner end of the second insulating portion 352 toward the first terminal hole 312. An outer end of the third insulating portion 353 may be integrally connected to the second insulating portion 352. An inner end of the third insulating portion 353 may face the first sealing member 340 and may come into contact with the second sealing portion 345 of the first sealing member 340.

In a state in which the third insulating portion 353 and the second sealing portion 345 are in contact with one another, the first sealing member 340 and the first insulating member 350 may continuously cover the second assembly groove 316, the edge portion of the first terminal hole 312, and the first assembly groove 315. Accordingly, in assembling the first connection member 320 and the first terminal 330 to the first terminal hole 312, the first assembly groove 315, and the second assembly groove 316, the first connection member 320 and the first terminal 330 can be stably insulated from the cap plate 310 by the first sealing member 340 and the first insulating member 350.

The second insulating portion 352 and the third insulating portion 353 may be formed at positions corresponding to the first terminal 330 and may stably insulate the first terminal 330 from the cap plate 310. The second insulating portion 352 and the third insulating portion 353 are not formed at positions where the first terminal 330 is not disposed, that is, not formed at positions corresponding to the first opening 337, thereby minimizing covering of or interfering with the first opening 337. Accordingly, the quality of bonding through the first opening 337 can be stably secured.

When performing ultrasonic fusion on the first connection member 320 and the first terminal 330, a load may act on the first connection member 320 and the first terminal 330 in the first direction, and the load may be transferred also to the first sealing member 340 and the first insulating member 350. The load transferred from the first outer block 335 of the first terminal 330 to the first insulating member 350 may act intensively on the second insulating portion 352. The second insulating portion 352 may preferably have a material and a thickness that can implement stiffness for supporting the load acting in the first direction when ultrasonic fusion is performed on the first connection member 320 and the first terminal 330.

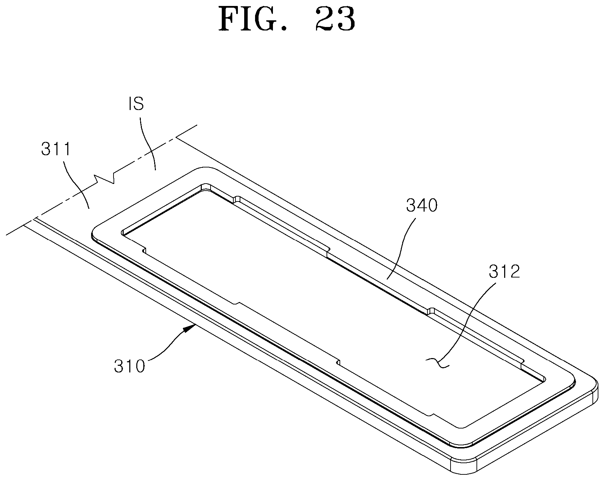

FIGS. 23 to 26 are views for describing a manufacturing process of the cap plate assembly according to embodiments of the present disclosure.

Referring to FIGS. 23 to 26, the first connection member 320 and the first terminal 330 may be bonded to one another by ultrasonic fusion. The first sealing member 340 may be disposed between the cap plate 310 and the first connection member 320, and the first insulating member 350 may be disposed between the cap plate 310 and the first terminal 330. The first terminal 330 and the first connection member 320 may be bonded to one another with the cap plate 310, the first sealing member 340, and the first insulating member 350 disposed therebetween and may be integrally joined to the cap plate 310, the first sealing member 340, and the first insulating member 350.

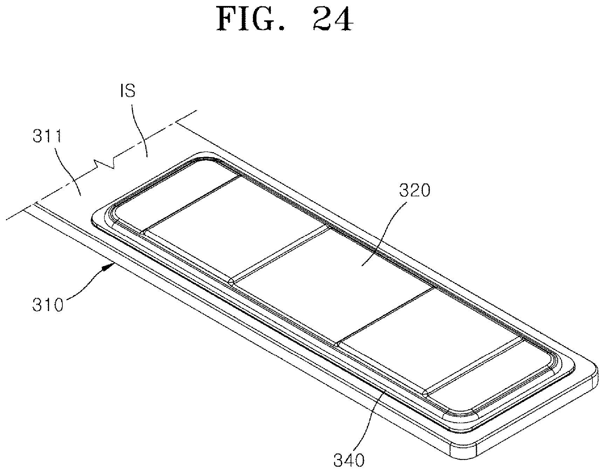

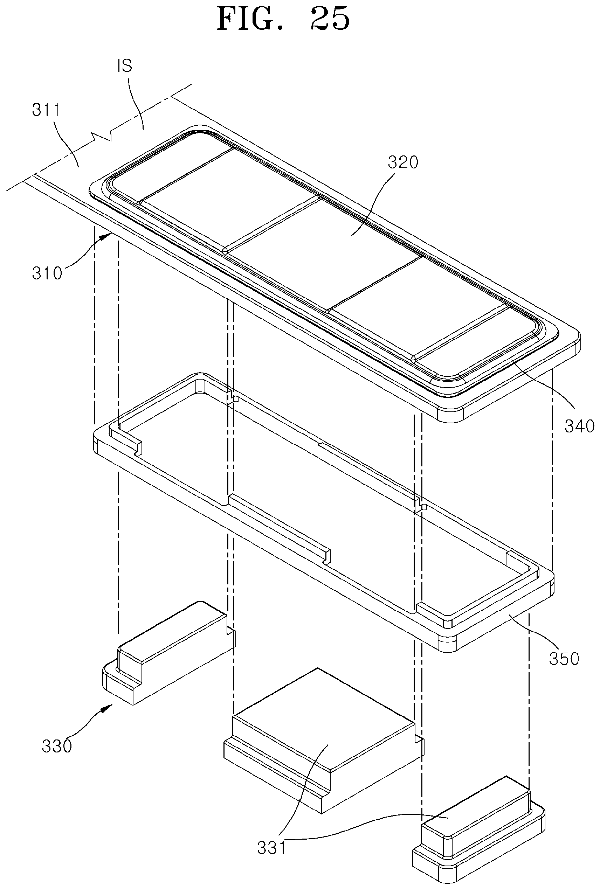

As illustrated in FIGS. 23 and 24, in a state in which the inner side surface IS of the cap plate 310 is disposed to face an upper side, the first sealing member 340 may be fitted to the first terminal hole 312, and then the first connection member 320 may be seated on the first sealing member 340. The cap plate 310 in a state in which the first sealing member 340 and the first connection member 320 are stacked may be seated on the first terminal 330 and the first insulating member 350 as illustrated in FIG. 25. Such assembling processes may be simultaneously or sequentially performed. In addition, some processes may be performed in reverse order as necessary.

In the herein arrangement state, the first terminal 330, the first insulating member 350, the cap plate 310, the first sealing member 340, and the first connection member 320 may be sequentially located from a lower side. Here, the first terminal 330 may be located at a lower side of the cap plate 310, and the first connection member 320 may be located at an upper side of the cap plate 310. The first outer block 335 of the first terminal 330 may be located to protrude downward from the cap plate 310.

In a state in which the first terminal 330, the first insulating member 350, the cap plate 310, the first sealing member 340, and the first connection member 320 are disposed as herein, the first connection member 320 and the first terminal 330 may be welded to one another by ultrasonic fusion. The first terminal 330 may be supported by being seated on an anvil 51 of an ultrasonic welder 5. A horn 52 of the ultrasonic welder 5 may press the first connection member 320 downward toward the first terminal 330 and may transfer ultrasonic vibration to the first connection member 320.

The horn 52 may apply a load toward the anvil 51 while in contact with the first terminal connection plate 322 of the first connection member 320 and may transfer ultrasonic waves for fusion. A fusion mark may be formed on a contact portion with the horn 52, but a fusion mark is not formed on the first outer block 335 of the first terminal 330 because the first terminal 330 does not come into contact with the horn 52. Accordingly, the first terminal 330 can maintain its initial state as it is without being deformed or damaged, and bonding between the first terminal 330 and the busbar 3 can be reliably performed with a consistent quality.

The anvil 51 and the horn 52 may be attached to and detached from the first terminal 330 and the first connection member 320 by being moved due to a pneumatic pressure, a motor, etc. The first terminal 330 and the first connection member 320 may not arbitrarily move while in contact with the anvil 51 and the horn 52 and may receive ultrasonic vibration having a predetermined amplitude while a contact pressure therebetween is constantly maintained.

The anvil 51 may have a width that can encompass a plurality of first terminal blocks 331. An end of the horn 52 may be disposed at three locations corresponding to the first block piece 332, the second block piece 333, and the third block piece 334, and ultrasonic fusion may be performed at a plurality of target positions while adjusting the position of the horn 52.

The first connection member 320 and the plurality of first terminal blocks 331 may be made of different materials and may be bonded to one another by ultrasonic fusion. For example, the first connection member 320 may be made of a material containing copper (Cu) as its main material, and the first terminal 330 may be made of a material containing aluminum (Al) as its main material.

When ultrasonic fusion is performed on the first connection member 320 and the first terminal 330, the first sealing member 340 may come into close contact with the inner side surface IS of the cap plate 310 and the first connection member 320 with a strength that corresponds to a bonding force between the first connection member 320 and the first terminal 330. The first insulating member 350 may come into close contact with the outer side surface OS of the cap plate 310 and the first terminal 330 with the strength that corresponds to the bonding force between the first connection member 320 and the first terminal 330.

The cap plate 310, the first connection member 320, the first terminal 330, the first sealing member 340, and the first insulating member 350 may be prevented from arbitrarily moving while in close contact with one another due to the bonding force between the first connection member 320 and the first terminal 330 and may be firmly integrally joined. The cap plate 310, the first connection member 320, the first terminal 330, the first sealing member 340, and the first insulating member 350 may constitute a single product, which corresponds to the cap plate assembly 300, while joined to one another.

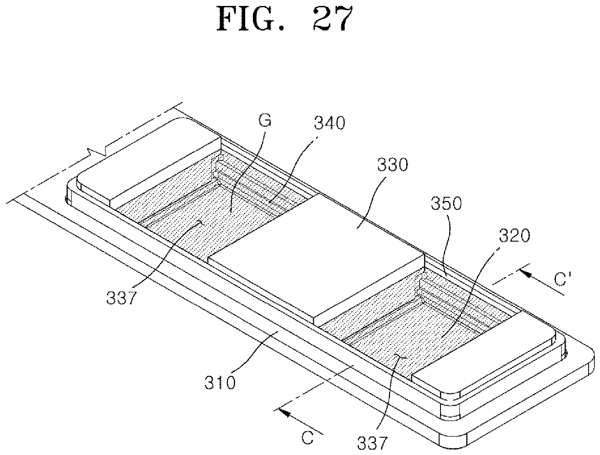

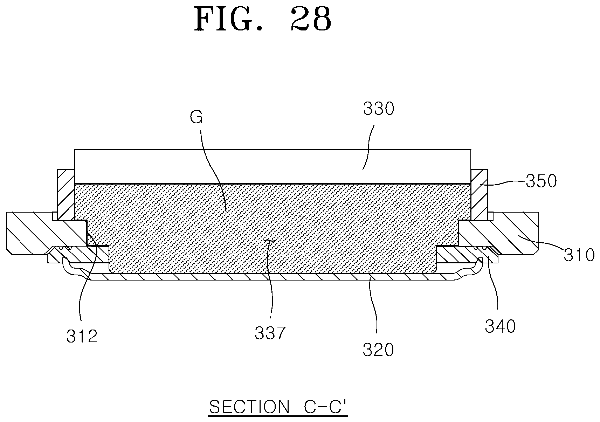

FIG. 27 is a main perspective view schematically illustrating a cap plate assembly according to embodiments of the present disclosure, and FIG. 28 is a cross-sectional view along line C-C' of FIG. 27.

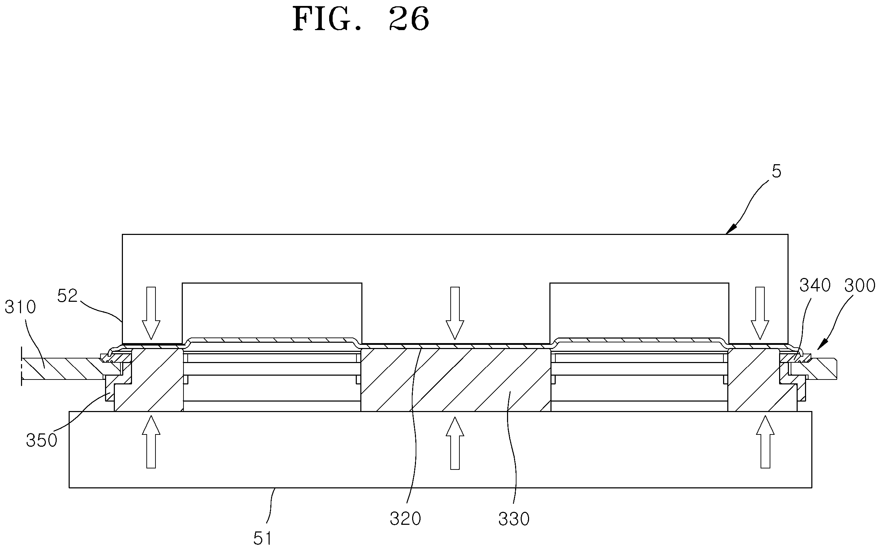

Referring to FIGS. 27 and 28, an adhesive member G may be applied on the cap plate assembly 300 according to the present disclosure. The inside of the first terminal hole 312 may be filled with the adhesive member G while the cap plate 310, the first connection member 320, the first terminal 330, the first sealing member 340, and the first insulating member 350 are joined to one another through the bonding process between the first connection member 320 and the first terminal 330 that is illustrated in FIG. 26.

The adhesive member G may be applied in the form of a liquid or gel in the first terminal hole 312 and may harden while in contact with the first connection member 320 and the first terminal 330. The first terminal blocks 331 of the first terminal 330 and the first opening 337 may be disposed on the first terminal hole 312. The adhesive member G may be applied and filled in the first opening 337 formed between the first terminal blocks 331.

In a state in which an outer side surface OS of the cap plate assembly 300 is disposed to be located at an upper side, the first opening 337 may be located to be open upward at an upper portion of the cap plate assembly 300. The adhesive member G may be added into the first opening 337 from an upper side and may be potted.

The adhesive member G may be made of a transparent material, and the laser L may reach the first connection member 320 from the outer side surface OS side of the cap plate 310 after passing through the adhesive member G. The laser L that has reached the first connection member 320 through the adhesive member G may act as energy for bonding and welding the first connection member 320 and the first tab member 240 to one another.

The adhesive member G may be an ultraviolet (UV) glue. When a UV glue is applied as the adhesive member G, the UV glue may be applied in the form of a liquid or gel in the first opening 337 and then may be hardened by being exposed to UV light (for example, having a wavelength of 365 nm).

In a state in which the first opening 337 is filled with the adhesive member G, the adhesive member G may come into contact with the first connection member 320 through a lower portion thereof in the first direction, may come into contact with circumferential surfaces of the plurality of first terminal blocks 331 in the second direction, and may sequentially come into contact with the first connection member 320, the first sealing member 340, the cap plate 310, and the first insulating member 350 from a lower side in the third direction. Accordingly, the first connection member 320, the first terminal blocks 331, the first sealing member 340, the cap plate 310, and the first insulating member 350 may be firmly and hermetically joined to one another using the adhesive member G.

The second connection member 360, the second terminal 370, the second sealing member 380, and the second insulating member 390 according to the present disclosure may have structures identical, symmetrical, or corresponding to the first connection member 320, the first terminal 330, the first sealing member 340, and the first insulating member 350, respectively. Therefore, detailed description of the structures and actions of the second connection member 360, the second terminal 370, the second sealing member 380, and the second insulating member 390 will be substituted with the detailed description of the first connection member 320, the first terminal 330, the first sealing member 340, and the first insulating member 350.

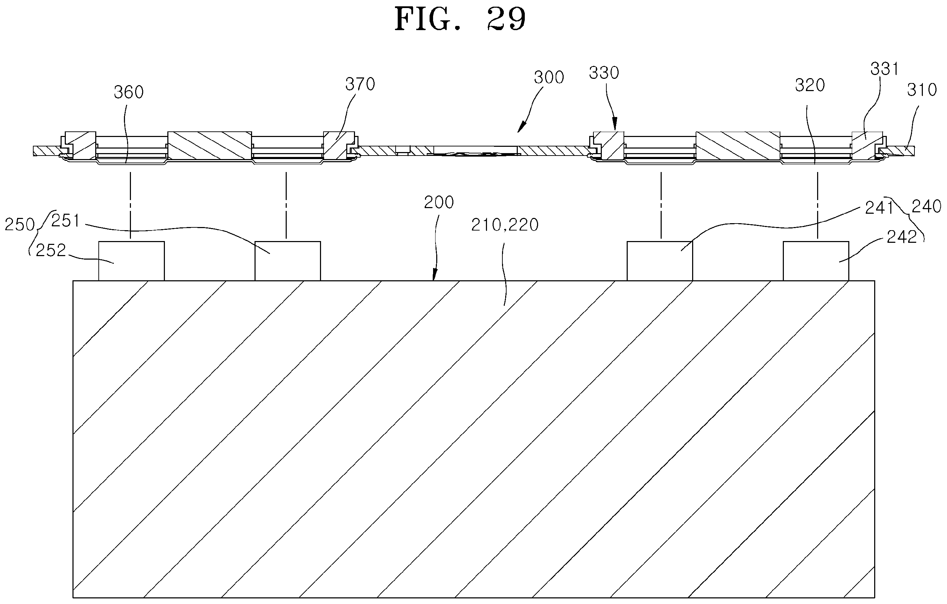

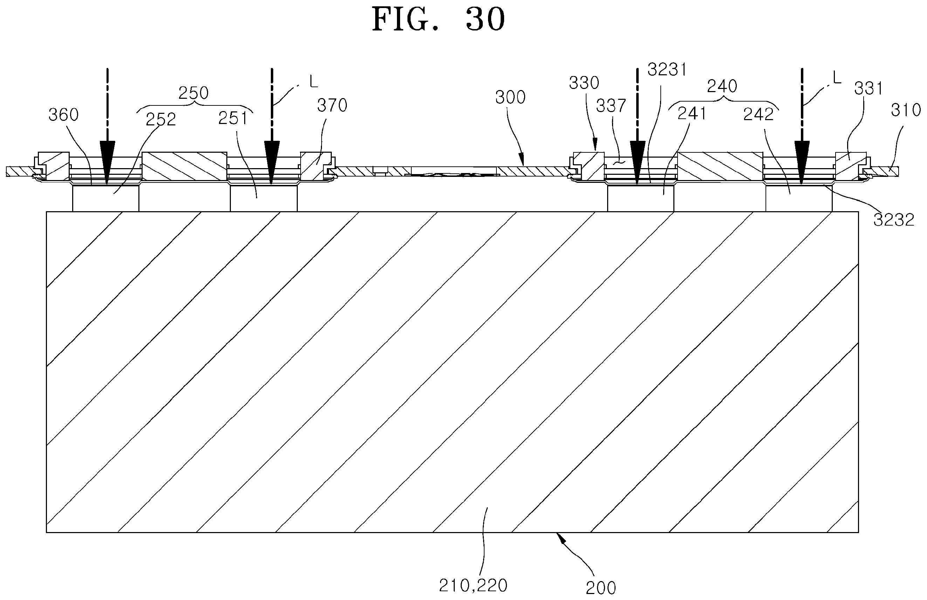

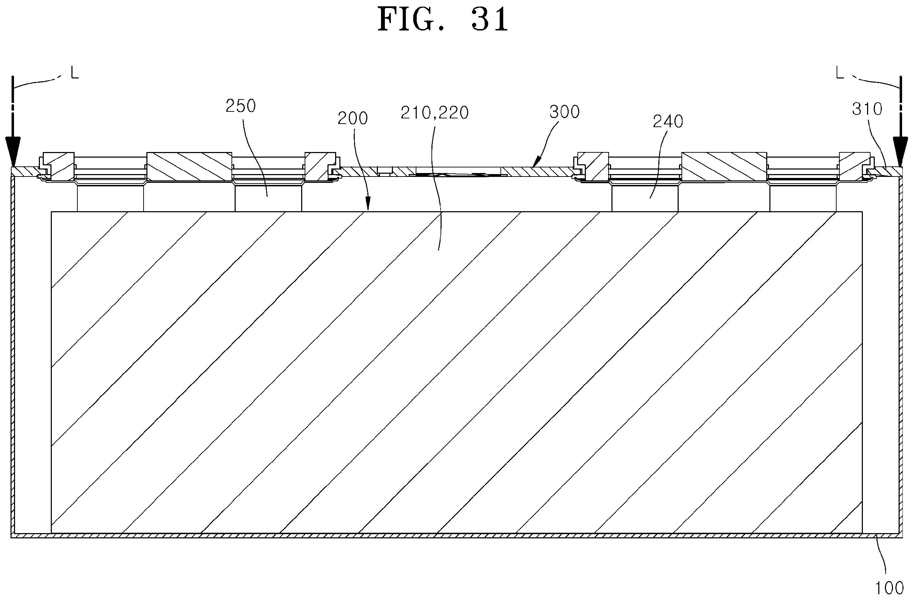

FIGS. 29 to 31 are views for describing a process of bonding a case, an electrode assembly, and a cap plate assembly to one another according to embodiments of the present disclosure..

Referring to FIGS. 29 to 31, in a state in which the cap plate assembly 300 and the electrode assembly 200 are disposed to come into contact with one another, the laser L is irradiated from the cap plate assembly 300 toward the electrode assembly 200 to bond the cap plate assembly 300 and the electrode assembly 200 to one another, and then the laser L is used again to bond the cap plate 310 to the case 100, and through this process, manufacturing of the secondary battery 2 may be completed.

In the secondary battery 2 according to embodiments of the present disclosure, in a state in which the first connection member 320 of the cap plate assembly 300 and the first tab member 240 of the electrode assembly 200 are disposed to come into contact with one another, by radiating the laser L from the outer side surface OS of the cap plate assembly 300 toward the first connection member 320, the first connection member 320 and the first tab member 240 may be bonded to one another.

The laser L may reach the first connection member 320 through the first terminal hole 312. The laser L may reach the first connection member 320 by passing through the first opening 337 disposed on the first terminal hole 312. The first tab connection plate 323 of the first connection member 320 may be disposed to be exposed to the outside at a position corresponding to the first opening 337.

The laser L may reach the first tab connection plate 323 by passing through the first opening 337 and may directly weld the first tab connection plate 323 and the first tab member 240 to one another. The first inner tab connection portion 3231 and the first outer tab connection portion 3232 of the first tab connection plate 323 may be directly bonded respectively to the first inner tab member 241 and the first outer tab member 242 of the first tab member 240 by the laser L and may be electrically connected to the first electrode 210.

The first electrode 210 may be a positive electrode, and the first tab member 240 may serve as a positive electrode tab of the secondary battery 2. The first connection member 320 may be bonded to a plurality of first tab members 240 and may serve to collect current. The first terminal 330 may be bonded to the first connection member 320, may be electrically connected to the first tab members 240, and may serve as a positive electrode terminal of the secondary battery 2.

In a state in which the second connection member 360 of the cap plate assembly 300 and the second tab member 250 of the electrode assembly 200 are disposed to come into contact with one another, by radiating the laser L from the outer side surface OS of the cap plate assembly 300 toward the second connection member 360, the second connection member 360 and the second tab member 250 may be bonded to one another.

Such arrangement of the second connection member 360 and the second tab member 250 may simultaneously occur with the arrangement of the first connection member 320 and the first tab member 240. Bonding between the second connection member 360 and the second tab member 250 may occur simultaneously or sequentially with bonding between the first connection member 320 and the first tab member 240.

The laser L may reach the second connection member 360 through the second terminal hole 319. The laser L may reach the second connection member 360 by passing between second terminals 370 disposed on the second terminal hole 319. A portion of the second connection member 360 may be exposed to the outside between the second terminals 370.

The laser L may reach the second connection member 360 by passing between the second terminals 370 and may directly weld the second connection member 360 and the second tab member 250 to one another. The second connection member 360 may be directly bonded to the second inner tab member 251 and the second outer tab member 252 of the second tab member 250 by the laser L and may be electrically connected to the second electrode 220.

The second electrode 220 may be a negative electrode, and the second tab member 250 may serve as a negative electrode tab of the secondary battery 2. The second connection member 360 may be bonded to a plurality of second tab members 250 and may serve to collect current. The second terminal 370 may be bonded to the second connection member 360, may be electrically connected to the second tab members 250, and may serve as a negative electrode terminal of the secondary battery 2.

According to the present disclosure having the herein-described configurations, by connecting the first connection member 320 and the first terminal 330 to one another with the cap plate 310 disposed therebetween, the cap plate assembly 300 can be manufactured to have a structure in which the cap plate 310, the first connection member 320, and the first terminal 330 are joined to one another. That is, the cap plate assembly 300 can have a structure including the first connection member 320 that serves to collect current.

Accordingly, in a state in which the first connection member 320 of the cap plate assembly 300 is disposed to come into contact with the electrode assembly 200, the first connection member 320 and the electrode assembly 200 can be directly bonded by radiating the laser L to the first connection member 320 exposed to the outside. Therefore, the number of welding processes can be reduced compared to a conventional case where multiple welding processes are performed due to laser-welding a separate current collecting member to the electrode assembly 200 and then laser-welding a terminal of the cap plate assembly 300 to the current collecting member.

In addition, according to the present disclosure, in connecting the first connection member 320 and the first terminal 330 to one another, by bonding the first connection member 320 and the first terminal 330 to one another by ultrasonic fusion in a state in which the sealing members 340 and 380 are disposed between the cap plate 310 and the first and second connection members 320 and 360 and the insulating members 350 and 390 are disposed between the cap plate 310 and the first and second terminals 330 and 370, the first connection member 320 and the first terminal 330 can be stably insulated from the cap plate 310 by a simple structure without a separate additional process.

Accordingly, compared to a conventional case where an insulating member and a gasket are integrally coupled to the cap plate 310 and a terminal by insert injection molding, the number of welding processes can be reduced, and material costs and process costs can be significantly reduced.

According to the present disclosure, by connecting a first connection member and a first terminal to one another with a cap plate disposed therebetween, a cap plate assembly can be manufactured to have a structure in which the cap plate, the first connection member, and the first terminal are joined to one another. That is, the cap plate assembly can have a structure including the first connection member that serves to collect current.

Accordingly, in a state in which the first connection member of the cap plate assembly is disposed to come into contact with an electrode assembly, the first connection member and the electrode assembly can be directly bonded by radiating a laser to the first connection member exposed to the outside. Therefore, the number of welding processes can be reduced compared to a conventional case where multiple welding processes are performed due to laser-welding a separate current collecting member to an electrode assembly and then laser-welding a terminal of a cap plate assembly to the current collecting member.

In addition, according to the present disclosure, in connecting the first connection member and the first terminal to one another with the cap plate disposed therebetween, by bonding the first connection member and the first terminal to one another by ultrasonic fusion in a state in which a sealing member is disposed between the cap plate and the first connection member and an insulating member is disposed between the cap plate and the first terminal, the first connection member and the first terminal can be stably insulated from the cap plate by a simple structure without a separate additional process.

Accordingly, compared to a conventional case where a sealing member and an insulating member are integrally coupled to a cap plate and a terminal by insert injection molding, the number of welding processes can be reduced, and material costs and process costs can be significantly reduced.

While the present disclosure has been described with reference to embodiments shown in the drawings, these embodiments are merely illustrative and it should be understood that various modifications and equivalent embodiments can be derived by those skilled in the art on the basis of the embodiments.

Therefore, the technical scope of the present disclosure should be defined by the appended claims.

## Claims

1. A secondary battery comprising:
a case (100);
an electrode assembly (200) that is disposed in the case (100) and has a first electrode (210) and a second electrode (220);
a cap plate (310) that is coupled to an open portion (160) of the case (100) and has a first terminal hole (312) formed therein;
a first connection member (320) installed on an inner side surface of the cap plate (310) and electrically connected to the first electrode (210);
a first terminal (330) installed on an outer side surface of the cap plate (310) and connected to the first connection member (320) through the first terminal hole (312);
a first sealing member (340) disposed between the cap plate (310) and the first connection member (320); and
a first insulating member (350) disposed between the cap plate (310) and the first terminal (330).

2. The secondary battery as claimed in claim 1, wherein the first connection member (320) and the first terminal (330) are bonded to one another with the cap plate (310), the first sealing member (340), and the first insulating member (350) disposed therebetween and are integrally joined to the cap plate (310), the first sealing member (340), and the first insulating member (350).

3. The secondary battery as claimed in claim 1 or claim 2, wherein the first sealing member (340) comes into contact with the inner side surface of the cap plate (310) due to a bonding force between the first connection member (320) and the first terminal (330).

4. The secondary battery as claimed in any one of claims 1 to 3, wherein the first insulating member (350) comes into contact with the outer side surface of the cap plate (310) due to a bonding force between the first connection member (320) and the first terminal (330).

5. The secondary battery as claimed in any one of claim 1 to 4, wherein the first sealing member (340) and the first insulating member (350) come into contact with one another due to a bonding force between the first connection member (320) and the first terminal (330).

6. The secondary battery as claimed in any one of claims 1 to 5, wherein the cap plate (310) comprises:
a cap plate body (311) having the first terminal hole (312) formed therein; and
a first assembly groove (315) formed in an inner side surface of the cap plate body (311) and to which the first sealing member (340) is fitted.

7. The secondary battery as claimed in claim 6, wherein the cap plate (310) further comprises a first protruding portion (317) that is formed on the first assembly groove (315) to protrude therefrom and comes into contact with the first sealing member (340).

8. The secondary battery as claimed in claim 7, wherein the cap plate (310) further comprises a second protruding portion (318) that is formed on the first assembly groove (315) to protrude therefrom and comes into contact with the first sealing member (340) at a position spaced from the first protruding portion (317).

9. The secondary battery as claimed in any one of claims 6 to 8, wherein the cap plate (310) further comprises a second assembly groove (316) that is formed in an outer side surface of the cap plate body (311) and on which an edge of the first insulating member (350) is seated.

10. The secondary battery as claimed in any one of claims 1 to 9, wherein the first sealing member (340) comprises:
a first sealing portion (341) that extends along a circumference of the first terminal hole (312) and is located between the cap plate (310) and the first connection member (320); and
a second sealing portion (345) that protrudes from the first sealing portion (341) toward the first terminal hole (312) and faces the first insulating member (350).

11. The secondary battery as claimed in claim 10, wherein the first sealing portion (341) comprises:
a first close contact portion (342) that is connected to the second sealing portion (345) and comes into contact with the cap plate (310); and
a second close contact portion (343) that is formed to protrude from the first close contact portion (342) toward the first connection member (320) and comes into contact with the first connection member (320).

12. The secondary battery as claimed in claim 11, wherein the first sealing portion (341) further comprises a second groove (344) formed in the second close contact portion (343) to be recessed therefrom and to which an edge of the first connection member (320) is fitted.

13. The secondary battery as claimed in any one of claim 1 to 12, wherein the first connection member (320) comprises:
a first connection body (321) that faces the first terminal hole (312) at a side of the inner side surface of the cap plate (310); and
a first support body (324) that is formed on an edge portion of the first connection body (321) and has a form that is bent toward the cap plate (310).

14. The secondary battery as claimed in claim 13, wherein:
the electrode assembly (200) comprises a first tab member (240) that extends from the first electrode (210) toward the first connection member (320); and
the first connection body (321) comprises a first terminal connection plate (322) that comes into contact with the first terminal (330) and a first tab connection plate (323) that is connected to the first terminal connection plate (322) and comes into contact with the first tab member (240).

15. A battery module comprising:
a housing; and
a plurality of rechargeable batteries disposed in the housing,
wherein each of the rechargeable batteries comprises:
a case (100);
an electrode assembly (200) that is disposed in the case (100) and has a first electrode (210) and a second electrode (220);
a cap plate (310) that is coupled to an open portion (160) of the case (100) and has a first terminal hole (312) formed therein;
a first connection member (320) installed on an inner side surface of the cap plate (310) and electrically connected to the first electrode (210);
a first terminal (330) installed on an outer side surface of the cap plate (310) and connected to the first connection member (320) through the first terminal hole (312);
a first sealing member (340) disposed between the cap plate (310) and the first connection member (320); and
a first insulating member (350) disposed between the cap plate (310) and the first terminal (330).
